(19) Europäisches Patentamt
European Patent Office
Office européen des brevets

(11) **EP 4 535 703 A1**

(12) **EUROPEAN PATENT APPLICATION**
published in accordance with Art. 153(4) EPC

(43) Date of publication:
**09.04.2025  Bulletin 2025/15**

(21) Application number: **23830115.4**

(22) Date of filing: **25.06.2023**

(51) International Patent Classification (IPC):
***H04L 5/00*** (2006.01)

(52) Cooperative Patent Classification (CPC):
**H04L 1/1854; H04L 1/1864; H04L 5/00;
H04W 36/00; H04W 72/0446; H04W 72/1263**

(86) International application number:
**PCT/CN2023/102049**

(87) International publication number:
**WO 2024/001937 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.06.2022  CN 202210758076**

(71) Applicant: **SHANGHAI LANGBO
COMMUNICATION TECHNOLOGY
COMPANY LIMITED
Shanghai 200240 (CN)**

(72) Inventors:
• **LIU, Zheng**
**Shanghai 201206 (CN)**
• **ZHANG, Xiaobo**
**Shanghai 201206 (CN)**

(74) Representative: **Zhang, Fan
Am Quälenberg 3A
38124 Braunschweig (DE)**

(54) **METHOD AND APPARATUS USED IN NODE FOR WIRELESS COMMUNICATION**

(57)    The present application discloses a method and a device in a node for wireless communications. The node receives a first information block and a second information block, the first information block being used to determine M1 delay sets; and the node receives a first signaling, the first signaling being used to determine a first slot, the first slot being used to determine a reference slot; and the node transmits a first signal in a target slot, the first signal carrying at least one HARQ-ACK bit associated to the first signaling; a target delay set is one of the M1 delay sets, and a number of slots between the reference slot and the target slot is equal to a delay value included in the target delay set; the first signaling is used for at least one serving cell, and a number of serving cell(s) for which the first signaling is used is used to determine the target delay set out of the M1 delay sets. This application enhances flexibility.

100

| receiving first information block and second information block | — 101 |

↓

| receiving first signaling | — 102 |

↓

| transmitting first signal in target slot | — 103 |

FIG. 1

**Description**

**TECHNICAL FIELD**

The present application relates to transmission methods and devices in wireless communication systems, and in particular to a multi-carrier transmission scheme and device in wireless communications.

**BACKGROUND**

Application scenarios of future wireless communication systems are becoming increasingly diversified, and different application scenarios have different performance demands on systems. In order to meet different performance requirements of various application scenarios, the 3rd Generation Partner Project (3GPP) Radio Access Network (RAN) #72 plenary decided to conduct the study of New Radio (NR), or what is called fifth Generation (5G). The work Item (WI) of NR was approved at the 3GPP RAN #75 plenary to standardize the NR.

The multi-carrier (including Carrier Aggregation, abbreviated as CA, and Dual Connectivity, abbreviated as DC) techniques is an integral part of New Radio (NR) technology. To adapt to diverse application scenarios and meet different requests, the 3GPP has been working on the evolution of multi-carrier techniques since from the Rel-15.

**SUMMARY**

In the multi-carrier communications, for instance Carrier Aggregation (CA), Cross Carrier Scheduling is supported. In networks supported by the existing standard, such as 5G New Radio (NR) in R17 and of previous versions, for multiple scheduled carriers, scheduling is only supported to be provided on carriers or Physical Downlink Control Channels (PDCCHs) respectively corresponding to the carriers, rather than through a same PDCCH on a same carrier. The HARQ-ACK (i.e., Hybrid Automatic Repeat Request Acknowledgement) feedback needs to be enhanced in designing when the same PDCCH is supported in a multi-carrier system to schedule PDSCHs or PUSCHs on multiple carriers simultaneously.

The present application discloses a solution to the problem of HARQ-ACK enhanced design in multi-carrier systems for NR. It should be noted that in the description of the present application, PDCCH scheduling in multicarriers is only used as an exemplary application scenario or example; this disclosure is equally applicable to other scenarios confronting similar problems, such as other scenarios having higher demands on the capacity of control channels, which include but are not limited to capacity enhancement system, the system using higher frequency, coverage enhancement system, Unlicensed Spectrum communication, the Internet of Things (IoT), Ultra Reliable Low Latency Communications (URLLC) network and Vehicle-to-Everything (V2X), where similar technical effects can be achieved. Additionally, the adoption of a unified solution for various scenarios, including but not limited to multi-carrier scenarios, contributes to the reduction of hardcore complexity and costs. In the case of no conflict, the embodiments of a first node and the characteristics in the embodiments may be applied to a second node, and vice versa. Particularly, for interpretations of the terminology, nouns, functions and variables (unless otherwise specified) in the present application, refer to definitions given in TS36 series, TS38 series and TS37 series of 3GPP specifications.

The present application provides a method in a first node for wireless communications, comprising:

receiving a first information block and a second information block, the first information block being used to determine M1 delay sets, each one of the M1 delay sets including at least one delay value, M1 being a positive integer greater than 1; and

receiving a first signaling, the first signaling being used to determine a first slot, the first slot being used to determine a reference slot; and

transmitting a first signal in a target slot, the first signal carrying at least one HARQ-ACK bit associated to the first signaling;

herein, each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE, and the second information block is used to determine a first indication value, the first indication value being associated to the at least one serving cell for which the first signaling is used for, the first indication value being used to determine CCE(s) occupied by the first signaling.

In one embodiment, determining the target delay set by the number of serving cells ensures the delay requirements for PDSCHs transmitted over a plurality of serving cells and HARQ-ACK feedback for SPS PDSCH release for a plurality of serving cells, thus improving scheduling flexibility.

According to one aspect of the present application, the above method is characterized in that a first information sub-block is an information sub-block included by the first information block, and the first information sub-block is used to determine a first delay set, the first delay set including at least one delay value; whether the first information block includes a second information sub-block is used to determine whether the M1 delay sets include the first delay set, the second information sub-block being an information sub-block other than the first information sub-block.

According to one aspect of the present application, the above method is characterized in that a target information sub-block is used to determine a second delay set; when the first information block includes the target information sub-block, the M1 delay sets include the second delay set; otherwise, the M1 delay sets include a third delay set, the third delay set being pre-defined.

In one embodiment, a fallback operation for the HARQ-ACK delay for DCI scheduling multiple cells is supported to further improve configuration flexibility.

According to one aspect of the present application, the above method is characterized in that when the target delay set includes multiple delay values, the first signaling is used to determine from the target delay set the number of slots between the reference slot and the target slot; when the target delay set includes only one delay value, the number of slots between the reference slot and the target slot is equal to the only one delay value included by the target delay set.

According to one aspect of the present application, the above method is characterized in that the first signaling is used to determine multiple time-domain resource sets, each one of the multiple time-domain resource sets including at least one time-domain symbol; the first slot is a downlink slot that overlaps in time domain with a latest time-domain symbol included by the multiple time-domain resource sets.

In one embodiment, selecting the latest time-domain symbol as a reference for the HARQ-ACK delay avoids resource ambiguity in the HARQ-ACK feedback and thus ensures effective transmission of the HARQ-ACK.

According to one aspect of the present application, the above method is characterized in that the first signaling is used to determine a number of serving cells for which the first signaling is used; when the number of serving cells for which the first signaling is used is greater than 1, the target delay set is one of the M1 delay sets; otherwise, the target delay set is another one of the M1 delay sets.

According to one aspect of the present application, the above method is characterized in that the first signal carries a first HARQ bit block, the first HARQ bit block including multiple HARQ-ACK bits; a detection of the first signaling is used to determine a bit value of a target HARQ bit, the target HARQ bit belongs to the first HARQ bit block, and an index of a reference serving cell is used to determine a position of the target HARQ bit in the first HARQ bit block; the first signaling is used for multiple serving cells, the reference serving cell being a serving cell to which the first signaling belongs or the reference serving cell being a pre-defined serving cell among the multiple serving cells.

In one embodiment, determining the HARQ-ACK bit location by the reference serving cell avoids repeated transmissions of HARQ-ACK bits of SPS PDSCH release commands and reduces signaling overhead.

The present application provides a method in a second node for wireless communications, comprising:

transmitting a first information block and a second information block, the first information block being used to determine M1 delay sets, each one of the M1 delay sets including at least one delay value, M1 being a positive integer greater than 1; and

transmitting a first signaling, the first signaling being used to determine a first slot, the first slot being used to determine a reference slot; and

receiving a first signal in a target slot, the first signal carrying at least one HARQ-ACK bit associated to the first signaling;

herein, each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE, and the second information block is used to determine a first indication value, the first indication value being associated to the at least one serving cell for which the first signaling is used for, the first indication value being used to determine CCE(s) occupied by the first signaling.

According to one aspect of the present application, the above method is characterized in that a first information sub-block is an information sub-block included by the first information block, and the first information sub-block is used to determine a first delay set, the first delay set including at least one delay value; whether the first information block includes a second information sub-block is used to determine whether the M1 delay sets include the first delay set, the second information sub-block being an information sub-block other than the first information sub-block.

According to one aspect of the present application, the above method is characterized in that a target information sub-block is used to determine a second delay set; when the first information block includes the target information sub-block, the M1 delay sets include the second delay set; otherwise, the M1 delay sets include a third delay set, the third delay set being pre-defined.

According to one aspect of the present application, the above method is characterized in that when the target delay set includes multiple delay values, the first signaling is used to determine from the target delay set the number of slots between the reference slot and the target slot; when the target delay set includes only one delay value, the number of slots between the reference slot and the target slot is equal to the only one delay value included by the target delay set.

According to one aspect of the present application, the above method is characterized in that the first signaling is used to determine multiple time-domain resource sets, each one of the multiple time-domain resource sets including at least one time-domain symbol; the first slot is a downlink slot that overlaps in time domain with a latest time-domain symbol included by the multiple time-domain resource sets.

According to one aspect of the present application, the above method is characterized in that the first signaling is used to determine a number of serving cells for which the first signaling is used; when the number of serving cells for which the first signaling is used is greater than 1, the target delay set is one of the M1 delay sets; otherwise, the target delay set is another one of the M1 delay sets.

According to one aspect of the present application, the above method is characterized in that the first signal carries a first HARQ bit block, the first HARQ bit block including multiple HARQ-ACK bits; a detection of the first signaling is used to determine a bit value of a target HARQ bit, the target HARQ bit belongs to the first HARQ bit block, and an index of a reference serving cell is used to determine a position of the target HARQ bit in the first HARQ bit block; the first signaling is used for multiple serving cells, the reference serving cell being a serving cell to which the first signaling belongs or the reference serving cell being a pre-defined serving cell among the multiple serving cells.

The present application provides a first node for wireless communications, comprising:

a first receiver, receiving a first information block and a second information block, the first information block being used to determine M1 delay sets, each one of the M1 delay sets including at least one delay value, M1 being a positive integer greater than 1; and

a second receiver, receiving a first signaling, the first signaling being used to determine a first slot, the first slot being used to determine a reference slot; and

a first transmitter, transmitting a first signal in a target slot, the first signal carrying at least one HARQ-ACK bit associated to the first signaling;

herein, each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE, and the second information block is used to determine a first indication value, the first indication value being associated to the at least one serving cell for which the first signaling is used for, the first indication value being used to determine CCE(s) occupied by the first signaling.

The present application provides a second node for wireless communications, comprising:

a second transmitter, transmitting a first information block and a second information block, the first information block being used to determine M1 delay sets, each one of the M1 delay sets including at least one delay value, M1 being a positive integer greater than 1; and

a third transmitter, transmitting a first signaling, the first signaling being used to determine a first slot, the first slot being used to determine a reference slot; and

a third receiver, receiving a first signal in a target slot, the first signal carrying at least one HARQ-ACK bit associated to the first signaling;

herein, each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE, and the second information block is used to determine a first indication value, the first indication value being associated to the at least one serving cell for which the first signaling is used for, the first indication value being used to determine CCE(s) occupied by the first signaling.

## BRIEF DESCRIPTION OF THE DRAWINGS

Other features, objects and advantages of the present application will become more apparent from the detailed description of non-restrictive embodiments taken in conjunction with the following drawings:

FIG. 1 illustrates a flowchart of a first information block, a second information block, a first signaling and a first signal according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first node and a second node according to one embodiment of the present application.
FIG. 5 illustrates a flowchart of radio signal transmission according to one embodiment of the present application.
FIG. 6 illustrates a schematic diagram of a relation between a first information sub-block and a second information sub-block according to one embodiment of the present application.
FIG. 7 illustrates a schematic diagram of a relation between a second delay set and a third delay set according to one embodiment of the present application.
FIG. 8 illustrates a schematic diagram of a target delay set according to one embodiment of the present application.
FIG. 9 illustrates a schematic diagram of first slot according to one embodiment of the present application.
FIG. 10 illustrates a schematic diagram of the number of serving cells for which a first signaling is used according to one embodiment of the present application.
FIG. 11 illustrates a schematic diagram of a target HARQ bit according to one embodiment of the present application.
FIG. 12 illustrates a structure block diagram of a processing device in a first node according to one embodiment of the present application.
FIG. 13 illustrates a structure block diagram of a processing device in a second node according to one embodiment of the present application.

## DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

## Embodiment 1

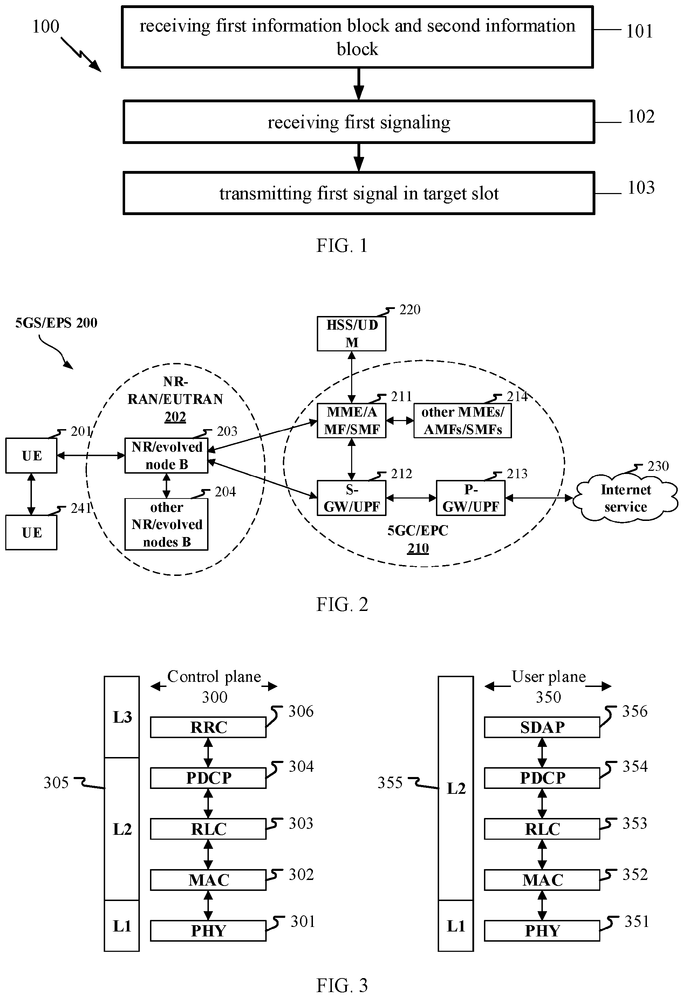

Embodiment 1 illustrates a flowchart 100 of a first information block, a second information block, a first signaling and a first signal according to one embodiment of the present application, as shown in FIG. 1. In FIG. 1, each step represents a step, it should be particularly noted that the order of boxes herein is just for illustration and does not restrict a chronological order of steps marked respectively by these boxes.
In Embodiment 1, the first node of the present application receives a first information block and a second information block in step 101, the first information block being used to determine M1 delay sets, each one of the M1 delay sets including at least one delay value, M1 being a positive integer greater than 1; and the first node of the present application receives a first signaling in step 102, the first signaling being used to determine a first slot, the first slot being used to determine a reference slot; and the first node of the present application transmits a first signal in a target slot in step 103, the first signal carrying at least one HARQ-ACK bit associated to the first signaling; herein, each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE, and the second information block is used to determine a first indication value, the first indication value being associated to the at least one serving cell for which the first signaling is used for, the first indication value being used to determine CCE(s) occupied by the first signaling.
In one embodiment, the first information block is transmitted via an air interface or a wireless interface.
In one embodiment, the first information block comprises all or part of a higher layer signaling or a physical layer signaling.
In one embodiment, the first information block comprises all or part of a Radio Resource Control (RRC) layer signaling, or the first information block comprises all or part of a Medium Access Control (MAC) layer signaling.

In one embodiment, the first information block comprises all or part of a System Information Block (SIB).

In one embodiment, the first information block is UE-specific.

In one embodiment, the first information block is configured per carrier, or the first information block is configured per BWP (i.e., bandwidth part), or the first information block is configured per PUCCH (i.e., Physical Uplink Control Channel) group.

In one embodiment, the first information block is configured per band or configured per Frequency Range (FR).

In one embodiment, the first information block comprises all or part of fields of an Information Element (IE) "CellGroupConfig"; or the first information block comprises all or part of fields of an IE "SCellConfig"; or the first information block comprises all or part of fields of an IE "SpCellConfig"; or the first information block comprises all or part of fields of an IE "ServingCellConfig"; or the first information block comprises all or part of fields of an IE "UplinkConfig".

In one embodiment, the first information block comprises all or part of fields in an IE "BWP-Uplink"; or the first information block comprises all or part of fields in an IE "BWP-UplinkDedicated"; or the first information block comprises all or part of fields in an IE "PUCCH-Config".

In one embodiment, the first information block comprises all or part of fields in a Downlink Control Information (DCI) format.

In one embodiment, the technical feature "the first information block being used to determine M1 delay sets" includes the following meaning: the first information block is used by the first node in the present application to determine the M1 delay sets.

In one embodiment, the technical feature "the first information block being used to determine M1 delay sets" includes the following meaning: all or part of the first information block is used to explicitly or implicitly indicate the M1 delay sets.

In one embodiment, the technical feature "the first information block being used to determine M1 delay sets" includes the following meaning: all or part of the first information block is used to explicitly or implicitly indicate all or part of delay sets among the M1 delay sets.

In one embodiment, the technical feature "the first information block being used to determine M1 delay sets" includes the following meaning: a characteristic delay set is one of the M1 delay sets, the characteristic delay set being pre-defined; all or part of the first information block is used to explicitly or implicitly indicate all or part of delay sets other than the characteristic delay set among the M1 delay sets. In one subsidiary embodiment of the above embodiment, the characteristic delay set is predefined as {1, 2, 3, 4, 5, 6, 7, 8}.

In one embodiment, the technical feature "the first information block being used to determine M1 delay sets" includes the following meaning: the first information block comprises M1 information sub-blocks, the M1 information sub-blocks being used to explicitly or implicitly indicate the M1 delay sets.

In one embodiment, the technical feature "the first information block being used to determine M1 delay sets" includes the following meaning: the first information block comprises M2 information sub-blocks, the M2 information sub-blocks being used to explicitly or implicitly indicate, respectively, M2 delay sets among the M1 delay sets, the M2 being a positive integer less than the M1; any delay set among the M1 delay sets other than the M2 delay sets being pre-defined.

In one embodiment, the technical feature "the first information block being used to determine M1 delay sets" includes the following meaning: a first information sub-block is an information sub-block included by the first information block, and the first information sub-block is used to determine a first delay set, the first delay set including at least one delay value; whether the first information block includes a second information sub-block is used to determine whether the M1 delay sets include the first delay set, the second information sub-block being an information sub-block other than the first information sub-block.

In one embodiment, each delay value included in one of the M1 delay sets is a possible number of slots between a Physical Downlink Shared Channel (PDSCH) and a corresponding HARQ-ACK.

In one embodiment, each delay value included in one of the M1 delay sets is a possible number of slots between a Physical Downlink Control Channel (PDCCH) and a corresponding HARQ-ACK.

In one embodiment, each delay value included in one of the M1 delay sets is a possible number of slots between a semi persistent scheduling (SPS) PDSCH release and a corresponding HARQ-ACK.

In one embodiment, one of the M1 delay sets is a PDSCH-to-Downlink (DL) ACK timing list.

In one embodiment, each one of the M1 delay sets is a sequence of integers for a PDSCH-to-Downlink (DL) ACK timing interval.

In one embodiment, the M1 delay sets include at least one predefined delay set.

In one embodiment, the M1 delay sets include a predefined delay set {1, 2, 3, 4, 5, 6, 7, 8}.

In one embodiment, each one of the M1 delay sets is configured.

In one embodiment, the M1 delay sets do not include a predefined delay set.

In one embodiment, each delay value included in each one of the M1 delay sets is a possible number of slots spaced from the downlink to a corresponding HARQ-ACK.

In one embodiment, one of the M1 delay sets is a sequence of integers indicated by a field or IE "dl-DataToUL-ACK".

In one embodiment, one of the M1 delay sets is a sequence of integers indicated by a field or IE "dl-DataToUL-ACK-r16".

In one embodiment, one of the M1 delay sets is a sequence of integers indicated by a field or IE "dl-DataToUL-ACK-DCI-1-2".

In one embodiment, one of the M1 delay sets is a sequence of integers indicated by a field or IE "dl-DataToUL-ACK-DCI-1-2-r17".

In one embodiment, one of the M1 delay sets is a sequence of integers indicated by a field or IE "dl-DataToUL-ACK-r17".

In one embodiment, one of the M1 delay sets is a sequence of integers indicated by a field or IE "dl-DataToUL-ACK-r18".

In one embodiment, one of the M1 delay sets is a sequence of integers indicated by a field or IE "dl-DataToUL-ACK-v1700".

In one embodiment, one of the M1 delay sets is a sequence of integers indicated by a field or IE "dl-DataToUL-ACK-MulticastDCI-Format4-1-r17".

In one embodiment, one of the M1 delay sets is a sequence of integers indicated by a field or IE "dl-DataToUL-ACK-DCI-1-$\Phi$-r18"; where "DCI-1-$\Phi$" corresponds to DCI format 1_$\Phi$. In one subsidiary embodiment of the above embodiment, the $\Phi$ is equal to 3. In one subsidiary embodiment of the above embodiment, the $\Phi$ is equal to 4. In one subsidiary embodiment of the above embodiment, the $\Phi$ is equal to 5. In one subsidiary embodiment of the above embodiment, the $\Phi$ represents a letter.

In one embodiment, one of the M1 delay sets is a predefined {1, 2, 3, 4, 5, 6, 7, 8}.

In one embodiment, each delay value included in each one of the M1 delay sets is a k value for a possible PDSCH-to-HARQ_feedback timing.

In one embodiment, each delay value included in each one of the M1 delay sets is a value that can be indicated by a possible PDSCH-to-HARQ_feedback timing indicator.

In one embodiment, any two of the M1 delay sets are independently configured from each other.

In one embodiment, any two of the M1 delay sets are configured separately from each other by two independent fields.

In one embodiment, any two of the M1 delay sets other than a predefined delay set are configured separately from each other by two independent fields.

In one embodiment, each delay value included in each one of the M1 delay sets is a non-negative integer.

In one embodiment, there exists a delay set among the M1 delay sets comprising at least one delay value equal to a negative integer.

In one embodiment, M1 is equal to 2, or M1 is equal to 3, or M1 is equal to 4, or M1 is equal to 5, or M1 is equal to 6.

In one embodiment, M1 is greater than 2.

In one embodiment, each delay value included in each one of the M1 delay sets is not greater than 15.

In one embodiment, each delay value included in each one of the M1 delay sets is not greater than 31.

In one embodiment, each delay value included in each one of the M1 delay sets is not greater than 127.

In one embodiment, each one of the M1 delay sets includes multiple delay values.

In one embodiment, there exists at least one delay set among the M1 delay sets comprising only one delay value.

In one embodiment, the first signaling is transmitted via an air interface, or the first signaling is transmitted via a wireless interface.

In one embodiment, the first signaling is a physical layer signaling.

In one embodiment, the first signaling is transmitted through a PDCCH.

In one embodiment, the first signaling comprises all or part of fields in a DCI format.

In one embodiment, the first signaling is RRC layer signaling or the first signaling is MAC layer signaling.

In one embodiment, the first signaling comprises a field "PDSCH-to-HARQ_feedback timing indicator" in a Message B (MsgB).

In one embodiment, the first signaling comprises a field "PDSCH-to-HARQ_feedback timing indicator" in a DCI format.

In one embodiment, the first signaling comprises all or part of a DCI format for scheduling PDSCH.

In one embodiment, the first signaling is a signaling used to configure Semi-Persistent Scheduling (SPS).

In one embodiment, the first signaling is used for SPS PDSCH release.

In one embodiment, the first signaling comprises a DCI format for scheduling a PDSCH, or the first signaling comprises a DCI format indicating an SPS PDSCH release, or the first signaling comprises a DCI format indicating an SCell (i.e., Secondary Cell) dormancy, or the first signaling comprises a DCI format indicating a TCI (i.e., Transmission Configuration Indication) state update.

In one embodiment, the first signaling carries a DCI format, the DCI format carried by the first signaling having associated HARQ-ACK information but not having scheduled PDSCH.

In one embodiment, the first signaling comprises all or part of a DCI format capable of scheduling multiple serving cells simultaneously.

In one embodiment, the first signaling comprises all or part of a DCI format capable of simultaneously scheduling PDSCHs on multiple serving cells or Physical Uplink Shared Channels (PUSCHs) on multiple serving cells.

In one embodiment, the first signaling comprises all or part of a DCI format only capable of scheduling a PDSCH or a PUSCH on one serving cell.

In one embodiment, the technical feature "the first signaling being used to determine a first slot" includes the following meaning: the first signaling is used by the first node of the present application to determine the first slot.

In one embodiment, the technical feature "the first signaling being used to determine a first slot" includes the following meaning: all or part of the first signaling is used to explicitly or implicitly indicate the first slot.

In one embodiment, the technical feature "the first signaling being used to determine a first slot" includes the following meaning: the first signaling is used to indicate a first time-domain resource set, the first time-domain resource set including at least one time-domain symbol, and the first slot is a downlink slot that (fully or partially) overlaps with at least one time-domain symbol in the first time-domain resource set in time domain.

In one embodiment, the technical feature "the first signaling being used to determine a first slot" includes the following meaning: the first signaling is used to determine multiple time-domain resource sets, any of the multiple time-domain resource sets including at least one time-domain symbol; the first slot is a downlink slot that (fully or partially) overlaps with at least one time-domain resource set of the multiple time-domain resource sets in time domain.

In one embodiment, the technical feature "the first signaling being used to determine a first slot" includes the following meaning: the first signaling is used to determine multiple time-domain resource sets, any of the multiple time-domain resource sets including at least one time-domain symbol; the first slot is a downlink slot that (fully or partially) overlaps with a latest time-domain symbol included by the multiple time-domain resource sets in time domain.

In one embodiment, the technical feature "the first signaling being used to determine a first slot" includes the following meaning: the first signaling is used to determine multiple time-domain resource sets, any of the multiple time-domain resource sets including at least one time-domain symbol; the first slot is a downlink slot that (fully or partially) overlaps with an earliest time-domain symbol of all time-domain symbols included by the multiple time-domain resource sets in time domain.

In one embodiment, the technical feature "the first signaling being used to determine a first slot" includes the following meaning: the first signaling is used to determine multiple time-domain resource sets, any of the multiple time-domain resource sets including at least one time-domain symbol; the first slot is an end slot of a time-domain resource set with the earliest start time among the multiple time-domain resource sets.

In one embodiment, the technical feature "the first signaling being used to determine a first slot" includes the following meaning: the first signaling is used to determine multiple time-domain resource sets, and a first time-domain resource set includes any time-domain symbol included by each one of the multiple time-domain resource sets, and the first slot is a downlink slot that (fully or partially) overlaps with at least one pre-defined or configured time-domain symbol included in the first time-domain resource set in time domain.

In one embodiment, the technical feature "the first signaling being used to determine a first slot" includes the following meaning: the first signaling is used to determine multiple time-domain resource sets, and the first slot is an end slot of a time-domain resource set that is the last to end among the multiple time-domain resource sets.

In one embodiment, the technical feature "the first signaling being used to determine a first slot" includes the following meaning: the first signaling is used to schedule multiple PDSCHs, and the first slot is an end slot of reception of the multiple PDSCHs.

In one embodiment, the technical feature "the first signaling being used to determine a first slot" includes the following meaning: the first signaling is used to schedule multiple PDSCHs, and the first slot is an end slot of reception of a PDSCH with a latest reception end time among the multiple PDSCHs.

In one embodiment, the technical feature "the first signaling being used to determine a first slot" includes the following meaning: the first signaling is used to schedule multiple PDSCHs, and the first slot is an end slot of reception of a PDSCH with an earliest reception start time among the multiple PDSCHs.

In one embodiment, the technical feature "the first signaling being used to determine a first slot" includes the following meaning: the first signaling is used to schedule multiple PDSCHs, a reference PDSCH is a PDSCH among the multiple PDSCHs, and the first slot is a start slot or an end slot of the reference PDSCH. In one subsidiary embodiment of the above embodiment, the reference PDSCH is a PDSCH with the earliest start time among the multiple PDSCHs. In one subsidiary embodiment of the above embodiment, the reference PDSCH is a PDSCH with the latest end time among the multiple PDSCHs. In one subsidiary embodiment of the above embodiment, the reference PDSCH is a PDSCH that is pre-defined or configurable among the multiple PDSCHs.

In one embodiment, the technical feature "the first slot is a downlink slot" includes the meaning that the first slot is an actual downlink slot.

In one embodiment, the technical feature "the first slot is a downlink slot" includes the meaning that the first slot is a virtual downlink slot.

In one embodiment, the technical feature "the first slot is a downlink slot" includes the meaning that the first slot is a slot comprising at least downlink time-domain symbols.

In one embodiment, the technical feature "the first slot is a downlink slot" includes the meaning that the first slot is a slot comprising at least time-domain symbols that can be used for downlink transmission.

In one embodiment, the technical feature "the first slot is a downlink slot" includes the meaning that the first slot comprises downlink time-domain symbols and flexible time-domain symbols.

In one embodiment, the technical feature "the first slot is a downlink slot" includes the meaning that the first slot comprises only downlink time-domain symbols.

In one embodiment, the technical feature "the first slot is a downlink slot" includes the meaning that the first slot comprises downlink time-domain symbols, flexible time-domain symbols and uplink time-domain symbols.

In one embodiment, a subcarrier spacing corresponding to the first slot is equal to a subcarrier spacing of a subcarrier occupied by the first signal.

In one embodiment, a subcarrier spacing corresponding to the first slot is unequal to a subcarrier spacing of a subcarrier occupied by the first signal.

In one embodiment, a subcarrier spacing corresponding to the first slot is equal to a subcarrier spacing of a subcarrier occupied by a PDSCH scheduled by the first signaling.

In one embodiment, a subcarrier spacing corresponding to the first slot is equal to a subcarrier spacing of a subcarrier occupied for transmitting the first signaling.

In one embodiment, a subcarrier spacing corresponding to the first slot is equal to a subcarrier spacing of a subcarrier included in a bandwidth part (BWP) to which a PDSCH scheduled by the first signaling belongs in frequency domain.

In one embodiment, the first signaling is used to schedule multiple PDSCHs, the first slot corresponding to a subcarrier spacing equal to a subcarrier spacing of a subcarrier occupied by at least one PDSCH of the multiple PDSCHs.

In one embodiment, the first signaling is used to schedule multiple PDSCHs, the first slot corresponding to a subcarrier spacing equal to a subcarrier spacing of a subcarrier included by a BWP to which at least one PDSCH of the multiple PDSCHs belongs in frequency domain.

In one embodiment, the first signaling is used to schedule multiple PDSCHs, the first slot corresponding to a subcarrier spacing equal to a subcarrier spacing of a PDSCH occupying a subcarrier with the largest subcarrier spacing among the multiple PDSCHs.

In one embodiment, the first signaling is used to schedule multiple PDSCHs, the first slot corresponding to a subcarrier spacing equal to a subcarrier spacing of a PDSCH occupying a subcarrier with the smallest subcarrier spacing among the multiple PDSCHs.

In one embodiment, the first signaling is used to schedule multiple PDSCHs, the first slot corresponding to a subcarrier spacing equal to a subcarrier spacing of a subcarrier occupied in frequency domain by a PDSCH with the latest reception end time among the multiple PDSCHs.

In one embodiment, a subcarrier spacing corresponding to the first slot is equal to the smaller subcarrier spacing by comparing a subcarrier spacing of a subcarrier occupied by the first signaling and a subcarrier spacing of a subcarrier occupied by one PDSCH scheduled by the first signaling.

In one embodiment, a subcarrier spacing corresponding to the first slot is equal to the larger subcarrier spacing by comparing a subcarrier spacing of a subcarrier occupied by the first signaling and a subcarrier spacing of a subcarrier occupied by one PDSCH scheduled by the first signaling.

In one embodiment, when a DCI format carried by the first signaling does not schedule a PDSCH, a subcarrier spacing corresponding to the first slot is equal to a subcarrier spacing of a subcarrier occupied for transmitting the first signaling; when the DCI format carried by the first signaling schedules a PDSCH, the subcarrier spacing corresponding to the first slot is equal to a subcarrier spacing of a subcarrier occupied by a PDSCH scheduled by the first signaling.

In one embodiment, a configuration signaling for a BWP to which the first signaling belongs in frequency domain is used to determine a subcarrier spacing of a subcarrier occupied by the first signaling.

In one embodiment, a subcarrier spacing of a subcarrier occupied by any PDSCH scheduled by the first signaling is configured by the configuration signaling for the BWP to which this PDSCH belongs in the frequency domain.

In one embodiment, the technical feature "the reference slot is an uplink slot" includes the meaning that the reference slot is an actual uplink slot.

In one embodiment, the technical feature "the reference slot is an uplink slot" includes the meaning that the reference slot is a virtual uplink slot.

In one embodiment, the technical feature "the reference slot is an uplink slot" includes the meaning that the reference slot is a slot comprising at least uplink time-domain symbols or at least flexible time-domain symbols.

In one embodiment, the technical feature "the reference slot is an uplink slot" includes the meaning that the reference slot is a slot comprising at least time-domain symbols that can be used for uplink transmission.

In one embodiment, the technical feature "the reference slot is an uplink slot" includes the meaning that the reference slot comprises uplink time-domain symbols and flexible time-domain symbols.

In one embodiment, the technical feature "the reference slot is an uplink slot" includes the meaning that the reference slot comprises only uplink time-domain symbols.

In one embodiment, the technical feature "the reference slot is an uplink slot" includes the meaning that the reference slot comprises downlink time-domain symbols, flexible time-domain symbols and uplink time-domain symbols.

In one embodiment, a subcarrier spacing (SCS) of the subcarrier occupied by the first signal is configured.

In one embodiment, the first signaling is used to determine the subcarrier spacing of the subcarrier occupied by the first signal.

In one embodiment, a signaling other than the first signaling is used to determine the subcarrier spacing of the subcarrier occupied by the first signal.

In one embodiment, a configuration signaling for a BWP to which the first signal belongs in frequency domain is used to determine a subcarrier spacing of a subcarrier occupied by the first signal.

In one embodiment, any two subcarriers occupied by the first signal have equal subcarrier spacings.

In one embodiment, the subcarrier spacing of the subcarrier occupied by the first signal is equal to one of 15kHz, 30kHz, 60kHz, 120kHz, or 240kHz.

In one embodiment, the technical feature "a time length of the reference slot being related to a subcarrier spacing of a subcarrier occupied by the first signal" includes the meaning that the configuration of the subcarrier spacing of the subcarrier occupied by the first signal is used to determine a time length of the reference slot.

In one embodiment, the technical feature "a time length of the reference slot being related to a subcarrier spacing of a subcarrier occupied by the first signal" includes the meaning that the time length of the reference slot is related to the subcarrier spacing of the subcarrier occupied by the first signal being configured.

In one embodiment, the technical feature "a time length of the reference slot being related to a subcarrier spacing of a subcarrier occupied by the first signal" includes the meaning that the configuration of the subcarrier spacing of the subcarrier occupied by the first signal is used to determine a time length of any time-domain symbol included in the reference slot.

In one embodiment, the technical feature "a time length of the reference slot being related to a subcarrier spacing of a subcarrier occupied by the first signal" includes the meaning that the configuration of the subcarrier spacing of the subcarrier occupied by the first signal is used to determine a number of $T_c$ included by any time-domain symbol included in the reference slot, where $T_c = 1/(480 \cdot 10^3 \cdot 4096)$ second.

In one embodiment, the technical feature "a time length of the reference slot being related to a subcarrier spacing of a subcarrier occupied by the first signal" includes the meaning that the time length of any time-domain symbol included in the reference slot is linearly related to 2 to the power of a configuration index of the subcarrier spacing of the subcarrier occupied by the first signal.

In one embodiment, the technical feature "the first slot being used to determine a reference slot" includes the following meaning that the first slot is used by the first node in the present application to determine the reference slot.

In one embodiment, the technical feature "the first slot being used to determine a reference slot" includes the following meaning that the reference slot is the latest uplink slot that fully overlaps or partially overlaps with the first slot in time domain.

In one embodiment, the technical feature "the first slot being used to determine a reference slot" includes the following meaning that the reference slot is the latest uplink slot whose start time is not later than the end time of the first slot.

In one embodiment, the technical feature "the first slot being used to determine a reference slot" includes the following meaning that the reference slot is the latest uplink slot sharing at least partially overlapping time-domain resources with the first slot.

In one embodiment, the technical feature "the first slot being used to determine a reference slot" includes the following meaning that an index of the first slot is used to calculate an index of the reference slot.

In one embodiment, the target slot is an uplink slot.

In one embodiment, the target slot is a slot comprising at least uplink time-domain symbols.

In one embodiment, the target slot is a slot comprising at least time-domain symbols that can be used for uplink transmission.

In one embodiment, the target slot comprises uplink time-domain symbols and flexible time-domain symbols.

In one embodiment, the target slot comprises only uplink time-domain symbols.

In one embodiment, the target slot is a slot that comprises at least uplink time-domain symbols or at least flexible time-domain symbols.

In one embodiment, the target slot comprises downlink time-domain symbols, flexible time-domain symbols and uplink time-domain symbols.

In one embodiment, the target slot and the reference slot correspond to the same subcarrier spacing.

In one embodiment, the target slot is a slot corresponding to the subcarrier spacing of the subcarrier occupied by the first signaling.

In one embodiment, the first signal occupies all or part of the target slot in time domain.

In one embodiment, any time-domain symbol occupied by the first signal in time domain belongs to the target slot.

In one embodiment, the first signal is a radio signal or a Radio Frequency (RF) signal.

In one embodiment, the first signal is a baseband signal.

In one embodiment, the first signal is transmitted via an air interface or a wireless interface.

In one embodiment, the first signal is transmitted via a Uu interface or a PC5 interface.

In one embodiment, a receiver of the first signal includes the second node in the present application.

In one embodiment, the first signal is transmitted through a PUCCH or a PUSCH.

In one embodiment, the first signal is transmitted through a Configured Grant (CG) PUSCH.

In one embodiment, the first signal comprises a PUCCH and a Reference Signal.

In one embodiment, the first signal comprises a PUSCH and a Reference Signal.

In one embodiment, one HARQ-ACK bit associated with the first signaling is a HARQ-ACK bit being used to determine that the first signaling is detected.

In one embodiment, one HARQ-ACK bit associated with the first signaling is a HARQ-ACK bit being used in response to the first signaling.

In one embodiment, one HARQ-ACK bit associated with the first signaling is an ACK (which means positive acknowledgement) bit.

In one embodiment, one HARQ-ACK bit associated with the first signaling has a bit value equal to "1".

In one embodiment, one HARQ-ACK bit associated with the first signaling is a HARQ-ACK bit that is used to determine that the DCI format carried by the first signaling is detected.

In one embodiment, one HARQ-ACK bit associated with the first signaling is a HARQ-ACK bit generated by the first node of this application when the DCI format carried by the first signaling is detected.

In one embodiment, one HARQ-ACK bit associated with the first signaling is a HARQ-ACK bit that is used to indicate whether or not at least one PDSCH scheduled by the first signaling is correctly decoded.

In one embodiment, one HARQ-ACK bit associated with the first signaling is a HARQ-ACK bit that is used to determine whether at least 1 transport block (TB) carried by at least one PDSCH scheduled by the first signaling is correctly decoded.

In one embodiment, one HARQ-ACK bit associated with the first signaling is a HARQ-ACK bit that is used to determine whether at least 1 transport block (TB) carried by at least one PDSCH scheduled by the first signaling passes the CRC checking when decoded.

In one embodiment, one HARQ-ACK bit associated with the first signaling is an ACK/NACK bit generated by the first node based on whether or not at least 1 transport block (TB) carried by at least one PDSCH scheduled by the first signaling is correctly decoded.

In one embodiment, any one HARQ-ACK bit carried by the first signal is a HARQ-ACK bit included in Uplink Control Information (DCI) bits carried by the first signal.

In one embodiment, any one HARQ-ACK bit carried by the first signal is a HARQ-ACK bit included in information bits carried by the first signal.

In one embodiment, any one HARQ-ACK bit carried by the first signal is a HARQ-ACK bit transmitted via the first signal.

In one embodiment, any one HARQ-ACK bit carried by the first signal is a HARQ-ACK bit that is used to generate the first signal.

In one embodiment, any one HARQ-ACK bit carried by the first signal is a HARQ-ACK bit included in a HARQ-ACK codebook transmitted on the first signal.

In one embodiment, the target delay set may be each one of the M1 delay sets.

In one embodiment, the target delay set may be a delay set among some of the M1 delay sets.

In one embodiment, the target delay set comprises only one delay value.

In one embodiment, the target delay set comprises a plurality of delay values.

In one embodiment, the number of slots between the reference slot and the target slot is a number of slots included in a time interval between a start time of the reference slot and a start time of the target slot.

In one embodiment, the number of slots between the reference slot and the target slot is a number of slots included in a time interval between an end time of the reference slot and a start time of the target slot.

In one embodiment, the number of slots between the reference slot and the target slot is a number of slots included in a time interval between an end time of the reference slot and an end time of the target slot.

In one embodiment, the number of slots between the reference slot and the target slot may be equal to 0.

In one embodiment, the reference slot is not later than the target slot.

In one embodiment, the number of slots between the reference slot and the target slot is a difference between an index of the target slot and an index of the reference slot.

In one embodiment, the number of slots between the reference slot and the target slot is a number of slots included in a time interval between the reference slot and the target slot that correspond to the same subcarrier spacing as the reference slot.

In one embodiment, the number of slots between the reference slot and the target slot is a number of slots included in a time interval between the reference slot and the target slot that correspond to the subcarrier spacing of the subcarrier occupied by the first signal.

In one embodiment, the technical feature "the first signaling is used for at least one serving cell" comprises the meaning that the first signaling is used for scheduling on at least one serving cell.

In one embodiment, the technical feature "the first signaling is used for at least one serving cell" comprises the meaning that the first signaling is used for simultaneous scheduling of PDSCHs or PUSCHs on at least one serving cell.

In one embodiment, the technical feature "the first signaling is used for at least one serving cell" comprises the meaning that the first signaling is used for simultaneous release of SPS PDSCHs on at least one serving cell.

In one embodiment, the technical feature "the first signaling is used for at least one serving cell" comprises the meaning that the first signaling is associated with at least one serving cell.

In one embodiment, the technical feature "the first signaling is used for at least one serving cell" comprises the meaning that the first signaling is used for simultaneously scheduling PDSCHs or PUSCHs on at least one serving cell, or the first signaling is used for simultaneously releasing SPS PDSCHs on at least one serving cell.

In one embodiment, the technical feature "the first signaling is used for at least one serving cell" comprises the meaning that the first signaling is used for simultaneously scheduling PDSCHs or PUSCHs on at least one serving cell, or the first signaling is used for simultaneously releasing SPS PDSCHs on at least one serving cell, or the first signaling is used for simultaneously indicating dormancy of at least one serving cell, or the first signaling is used for simultaneously indicating TCI state updates on at least one serving cell.

In one embodiment, the technical feature "the first signaling is used for at least one serving cell" comprises the meaning that the first signaling is for at least one serving cell.

In one embodiment, the number of serving cell(s) for which the first signaling is used is a positive integer.

In one embodiment, the number of serving cell(s) for which the first signaling is used is equal to 1 or greater than 1.

In one embodiment, the number of serving cell(s) for which the first signaling is used is not greater than 8.

In one embodiment, the number of serving cell(s) for which the first signaling is used is not greater than 4.

In one embodiment, the number of serving cell(s) for which the first signaling is used is not greater than a maximum value of the number of serving cells that can be simultaneously scheduled by a PDCCH or a DCI format as indicated by a capability report of the first node.

In one embodiment, the number of serving cell(s) for which the first signaling is used is related to a DCI format carried by the first signaling.

In one embodiment, the number of serving cell(s) for which the first signaling is used is used to determine a DCI format carried by the first signaling.

In one embodiment, the number of serving cell(s) for which the first signaling is used is configured or indicated by a capability report of the first node.

In one embodiment, one or more fields in the DCI format carried by the first signaling is/are used to explicitly or implicitly indicate the number of serving cells for which the first signaling is used.

In one embodiment, the number of serving cell(s) for which the first signaling is used is the number of serving cell(s) for which the first signaling is actually used.

In one embodiment, the number of serving cell(s) for which the first signaling is used is a maximum value of the number of serving cell(s) for which the first signaling can be used.

In one embodiment, the number of serving cell(s) for which the first signaling is used is a maximum value of the number of serving cell(s) for which the first signaling is used, as is configured by a higher-layer signaling or higher-layer parameter.

In one embodiment, the number of serving cell(s) for which the first signaling is used is a maximum value of the number of serving cell(s) for which the first signaling is used, as indicated by a capability report of the first node.

In one embodiment, the technical feature "a number of serving cell(s) for which the first signaling is used is used to determine the target delay set out of the M1 delay sets" includes the following meaning: the number of serving cell(s) for which the first signaling is used is used by the first node of the present application to determine the target delay set out of the M1 delay sets.

In one embodiment, the technical feature "a number of serving cell(s) for which the first signaling is used is used to determine the target delay set out of the M1 delay sets" includes the following meaning: the first signaling is used to determine a number of serving cell(s) for which the first signaling is used; when the number of serving cell(s) for which the first signaling is used is equal to 1, the target delay set is one of the M1 delay sets; when the number of serving cell(s) for which the first signaling is used is greater than 1, the target delay set is another one of the M1 delay sets.

In one embodiment, the technical feature "a number of serving cell(s) for which the first signaling is used is used to determine the target delay set out of the M1 delay sets" includes the following meaning: when the number of serving cell(s) for which the first signaling is used is equal to 1, the target delay set is one of the M1 delay sets; when the number of serving cell(s) for which the first signaling is used is greater than 1, the target delay set is another one of the M1 delay sets.

In one embodiment, the technical feature "a number of serving cell(s) for which the first signaling is used is used to determine the target delay set out of the M1 delay sets" includes the following meaning: when the first signaling carries DCI that can simultaneously schedule PDSCHs on multiple serving cells, the target delay set is one of the M1 delay sets; when the first signaling carries DCI that schedules only PDSCHs on one serving cell, the target delay set is another one of the M1 delay sets.

In one embodiment, the technical feature "a number of serving cell(s) for which the first signaling is used is used to determine the target delay set out of the M1 delay sets" includes the following meaning: the DCI format carried by the first signaling is used to determine the target delay set out of the M1 delay sets.

In one embodiment, the technical feature "a number of serving cell(s) for which the first signaling is used is used to determine the target delay set out of the M1 delay sets" includes the following meaning: the DCI format carried by the first signaling is used to determine the target delay set out of the M1 delay sets, the DCI format carried by the first signaling being related to the number of serving cell(s) for which the first signaling is used.

In one embodiment, the technical feature "a number of serving cell(s) for which the first signaling is used is used to determine the target delay set out of the M1 delay sets" includes the following meaning: when the DCI format carried by the first signaling is DCI format 1_$\Phi$, the target delay set is one of the M1 delay sets; otherwise, the target delay set is another one of the M1 delay sets; where the $\Phi$ is a positive integer greater than 2 or the $\Phi$ represents a letter. In one subsidiary embodiment of the above embodiment, the $\Phi$ is equal to 3. In one subsidiary embodiment of the above embodiment, the $\Phi$ is equal to 4. In one subsidiary embodiment of the above embodiment, the $\Phi$ is equal to 5.

In one embodiment, the technical feature "a number of serving cell(s) for which the first signaling is used is used to determine the target delay set out of the M1 delay sets" includes the following meaning: whether the DCI format carried by the first signaling is DCI format 1_$\Phi$ is used to determine the target delay set out of the M1 delay sets; where the DCI format 1_$\Phi$ is a DCI format capable of simultaneously scheduling PDSCHs on multiple serving cells.

In one embodiment, the technical feature "a number of serving cell(s) for which the first signaling is used is used to determine the target delay set out of the M1 delay sets" includes the following meaning: the DCI format carried by the first signaling is used to determine the target delay set out of the M1 delay sets, the DCI format carried by the first signaling being related to a maximum value of the number of serving cell(s) for which the first signaling is used as configured by a higher-layer signaling or a higher-layer parameter.

In one embodiment, the technical feature "a number of serving cell(s) for which the first signaling is used is used to determine the target delay set out of the M1 delay sets" includes the following meaning: whether the number of serving cell(s) for which the first signaling is used is greater than 1 is used to determine whether the target delay set is a configured or pre-defined delay set of the M1 delay sets.

In one embodiment, the technical feature "the first signaling occupies at least one CCE" includes the following meaning: the first signaling is detected on at least one control channel element (CCE).

In one embodiment, the technical feature "the first signaling occupies at least one CCE" includes the following meaning: at least one CCE being occupied by a PDCCH candidate where the first signaling is detected.

In one embodiment, the technical feature "the first signaling occupies at least one CCE" includes the following meaning: the first signaling is transmitted on at least one CCE.

In one embodiment, the first signaling occupies only one CCE.

In one embodiment, the first signaling occupies multiple CCEs.

In one embodiment, the number of CCE(s) occupied by the first signaling is equal to one of 1, 2, 4, 8 or 16.

In one embodiment, the number of CCE(s) occupied by the first signaling is equal to the aggregation level (AL) of the first signaling.

In one embodiment, the second information block is earlier than the first information block.

In one embodiment, the second information block is later than the first information block.

In one embodiment, the first information block and the second information block are transmitted simultaneously on a physical channel.

In one embodiment, the second information block is transmitted via an air interface or a wireless interface.

In one embodiment, the second information block comprises all or part of a higher layer signaling or a physical layer signaling.

In one embodiment, the second information block comprises all or part of a Radio Resource Control (RRC) layer signaling, or the second information block comprises all or part of a Medium Access Control (MAC) layer signaling.

In one embodiment, the second information block comprises all or part of a System Information Block (SIB).

In one embodiment, the second information block is UE-specific.

In one embodiment, the second information block is configured per carrier, or the second information block is configured per bandwidth part (BWP), or the second information block is configured per search space.

In one embodiment, the second information block is configured per band or configured per Frequency Range (FR).

In one embodiment, the second information block comprises all or part of fields in an Information Element (IE) "CellGroupConfig".

In one embodiment, the second information block comprises a Field "secondaryCellGroup", or the second information block comprises a Field "masterCellGroup".

In one embodiment, the second information block is configured Per Cell group, or the second information block is configured Per PUCCH (i.e., Physical Uplink Control Channel) group.

In one embodiment, the second information block comprises all or part of fields in an IE"ServingCellConfig", or the second information block comprises all or part of fields in an IE"BWP-Downlink", or the second information block comprises all or part of fields in an IE "crossCarrierSchedulingConfig", or the second information block comprises all or part of fields in an IE "PDCCH-ServingCellConfig".

In one embodiment, the second information block comprises all or part of fields in an IE "pdcch-ConfigCommon".

In one embodiment, the second information block comprises all or part of fields in an IE "BWP-DownlinkCommon".

In one embodiment, the second information block comprises all or part of fields in an IE "BWP-DownlinkDedicated".

In one embodiment, the second information block comprises all or part of fields in an IE "pdcch-Config".

In one embodiment, the second information block comprises all or part of fields in an IE "SearchSpace".

In one embodiment, the second information block comprises all or part of fields in an IE "SearchSpaceExt-v1800", or the second information block comprises all or part of fields in an IE "SearchSpaceExt2-r18".

In one embodiment, the second information block comprises all or part of fields in a Downlink Control Information (DCI) format.

In one embodiment, the technical feature "the second information block is used to determine a first indication value" includes the following meaning: the second information block is used by the first node in the present application to determine the first indication value.

In one embodiment, the technical feature "the second information block is used to determine a first indication value" includes the following meaning: all or part of the second information block is used to explicitly or implicitly indicate the first indication value.

In one embodiment, the technical feature "the second information block is used to determine a first indication value" includes the following meaning: all or part of the second information block is used to indicate, explicitly or implicitly, a list of cell sets, the list of cell sets comprising at least one cell set, any cell set in the list of cell sets comprising at least one serving cell; the serving cells for which the first signaling is used belong to a same cell set in the list of cell sets, and the first indication value is equal to an identifier or index of the cell set to which the serving cells for which the first signaling is used belong in the list of cell sets.

In one embodiment, the technical feature "the second information block is used to determine a first indication value" includes the following meaning: all or part of the second information block is used to indicate, explicitly or implicitly, a list of cell sets, the list of cell sets comprising at least one cell set, and the second information block is also used to indicate, explicitly or implicitly, an identifier or index of each cell set in the list of cell sets, any cell set in the list of cell sets comprising at least one serving cell; the serving cells for which the first signaling is used belong to a same cell set in the list of cell sets, and the first indication value is equal to an identifier or index of the cell set to which the serving cells for which the first signaling is used belong.

In one embodiment, the technical feature "the second information block is used to determine a first indication value" includes the following meaning: all serving cells for which the first signaling is used belong to a first cell set, the first cell set belongs to a list of cell sets, the list of cell sets comprising at least one cell set; all or part of the second information block is used to explicitly or implicitly indicate an identifier or index of each cell set in the list of cell sets; the first indication value is equal to an identifier or index of the first cell set.

In one embodiment, the technical feature "the second information block is used to determine a first indication value" includes the following meaning: all or part of the second information block is used to explicitly or implicitly indicate a CIF value of one serving cell for which the first signaling is used, the first indication value being equal to the CIF value of one serving cell for which the first signaling is used.

In one embodiment, the technical feature "the second information block is used to determine a first indication value" includes the following meaning: all or part of the second information block is used to explicitly or implicitly indicate at least one serving cell for which the first signaling is used, the first indication value being equal to an identifier value or index value of at least one serving cell for which the first signaling is used.

In one embodiment, the technical feature "the second information block is used to determine a first indication value" includes the following meaning: all or part of the second information block is used to explicitly or implicitly indicate a cell set consisting of all serving cells for which the first signaling is used, the first indication value being equal to an identifier value or index value of the cell set consisting of all the serving cells for which the first signaling is used.

In one embodiment, the first indication value is equal to a CIF (i.e., carrier indicator field) value.

In one embodiment, the first indication value is equal to a CIF value of a serving cell for which the first signaling is used.

In one embodiment, the first indication value is equal to a value indicated by the second information block configured independent of the CIF.

In one embodiment, the first indication value is equal to a default value or a predefined value.

In one embodiment, the first indication value is an integer.

In one embodiment, the first indication value may be equal to 0.

In one embodiment, the first indication value is greater than 0.

In one embodiment, the first indication value is a non-negative integer not greater than 7.

In one embodiment, the first indication value is no greater than 31.

In one embodiment, the first indication value is greater than 7.

In one embodiment, the first indication value is greater than 31.

In one embodiment, a range of values for the first indication value is predefined or configurable.

In one embodiment, a range of values for the first indication value is related to the protocol release.

In one embodiment, the technical feature "the first indication value being associated to the at least one serving cell for which the first signaling is used for" comprises the meaning that the first indication value is used to identify or index the at least one serving cell for which the first signaling is used.

In one embodiment, the technical feature "the first indication value being associated to the at least one serving cell for which the first signaling is used for" comprises the meaning that the first indication value is used to identify or index a cell set consisting of all serving cells for which the first signaling is used.

In one embodiment, the technical feature "the first indication value being associated to the at least one serving cell for which the first signaling is used for" comprises the meaning that the first indication value is configured for the at least one serving cell for which the first signaling is used.

In one embodiment, the technical feature "the first indication value being associated to the at least one serving cell for which the first signaling is used for" comprises the meaning that the first indication value and the at least one serving cell for which the first signaling is used are configured by two fields in a same IE.

In one embodiment, the technical feature "the first indication value being associated to the at least one serving cell for which the first signaling is used for" comprises the meaning that the first indication value and the at least one serving cell for which the first signaling is used are configured by two sub-fields in a same field.

In one embodiment, the technical feature "the first indication value being associated to the at least one serving cell for which the first signaling is used for" comprises the meaning that the first indication value corresponds to the at least one serving cell for which the first signaling is used.

In one embodiment, the technical feature "the first indication value being associated to the at least one serving cell for which the first signaling is used for" comprises the meaning that an IE that configures the at least one serving cell for which the first signaling is used comprises at least one field being used to explicitly or implicitly indicate the first indication value.

In one embodiment, the technical feature "the first indication value being associated to the at least one serving cell for which the first signaling is used for" comprises the meaning that the first signaling comprises one or more fields being used to explicitly or implicitly indicate the first indication value.

In one embodiment, the technical feature "the first indication value being associated to the at least one serving cell for which the first signaling is used for" comprises the meaning that the first indication value is applicable for the at least one serving cell for which the first signaling is used.

In one embodiment, the technical feature "the first indication value being associated to the at least one serving cell for which the first signaling is used for" comprises the meaning that the first indication value indicates an applicable grant or assignment for the at least one serving cell for which the first signaling is used.

In one embodiment, the technical feature "the first indication value being associated to the at least one serving cell for which the first signaling is used for" comprises the meaning that the first indication value is used to determine an identifier or index of the at least one serving cell for which the first signaling is used in a corresponding scheduling DCI.

In one embodiment, the technical feature "the first indication value being associated to the at least one serving cell for which the first signaling is used for" comprises the meaning that the first indication value is designated or assigned to the at least one serving cell for which the first signaling is used.

In one embodiment, the second information block is used to determine that the first indication value is associated with at least one serving cell for which the first signaling is used.

In one embodiment, the second information block is used to determine an association between the first indication value and at least one serving cell for which the first signaling is used.

In one embodiment, an information block other than the second information block is used to determine an association between the first indication value and at least one serving cell for which the first signaling is used.

In one embodiment, the technical feature "the first indication value being used to determine CCE(s) occupied by the first signaling" includes the following meaning: the first indication value is used by the first node of the present application to determine CCE(s) occupied by the first signaling.

In one embodiment, the technical feature "the first indication value being used to determine CCE(s) occupied by the first signaling" includes the following meaning: the first indication value is used to determine an index of a starting CCE occupied by the first signaling.

In one embodiment, the technical feature "the first indication value being used to determine CCE(s) occupied by the first signaling" includes the following meaning: the first indication value is used to determine each CCE occupied by the first signaling.

In one embodiment, the technical feature "the first indication value being used to determine CCE(s) occupied by the first signaling" includes the following meaning: the first indication value is used to determine the distribution of all the CCEs occupied by the first signaling in a Control Resource Set (CORESET) to which they belong.

In one embodiment, the technical feature "the first indication value being used to determine CCE(s) occupied by the first signaling" includes the following meaning: the first indication value is used to determine PDCCH candidates occupied by the first signaling.

In one embodiment, the technical feature "the first indication value being used to determine CCE(s) occupied by the first signaling" includes the following meaning: the first indication value is used to determine a PDCCH candidate occupied by the first signaling.

In one embodiment, the technical feature "the first indication value being used to determine CCE(s) occupied by the first signaling" includes the following meaning: the first indication value is used to determine the position of a PDCCH candidate occupied by the first signaling in a search space set to which the PDCCH candidate belongs.

In one embodiment, the technical feature "the first indication value being used to determine CCE(s) occupied by the first signaling" includes the following meaning: the first indication value is used to determine starting CCEs respectively occupied by P1 PDCCH candidates, and the PDCCH candidate occupied by the first signaling is one of the P1 PDCCH candidates, P1 being a positive integer greater than 1.

In one embodiment, the technical feature "the first indication value being used to determine CCE(s) occupied by the first signaling" includes the following meaning: the first indication value is used to determine P1 CCE subsets from a control resource set to which the CCE(s) occupied by the first signaling belongs/belong, each one of the P1 CCE subsets comprises at least one CCE, and the first signaling occupies one CCE subset of the P1 CCE subsets, P1 being a positive integer greater than 1.

In one embodiment, the technical feature "the first indication value being used to determine CCE(s) occupied by the first signaling" includes the following meaning: the first indication value is used as a parameter to compute, according to a formula for search space set, the CCE(s) occupied by the first signaling from a control resource set to which the CCE(s) occupied by the first signaling belongs/belong.

In one embodiment, the technical feature "the first indication value being used to determine CCE(s) occupied by the first signaling" is implemented by satisfying the following relationship:

the search space set s to which the PDCCH candidate occupied by the first signaling belongs is associated with the control resource set $p$ to which the CCE(s) occupied by the first signaling belongs/belong, $L$ represents an aggregation level of the first signaling, and an index of a CCE occupied by a PDCCH candidate $m_{s,n_{SI}}^{(L)}$ probably occupied by the first signaling with respect to the first indication value $n_{SI}$ satisfies:

$$L \cdot \left\{ \left( Y_{p,n_{s,f}^{\mu}} + \left\lfloor \frac{m_{s,n_{SI}}^{(L)} \cdot N_{\text{CCE},p}}{L \cdot M_{s,\max}^{(L)}} \right\rfloor + n_{SI} \right) mod \left\lfloor N_{\text{CCE},p}/L \right\rfloor \right\} + i$$

where $i = 0, \cdots, L$ - 1, $Y_{p,n_{s,f}^{\mu}}$ is a value related to a control resource set $p$, $N_{\text{CCE},p}$ represents the number of CCEs in the control resource set $p$, and $M_{s,\max}^{(L)}$ represents the number of PDCCH candidates belonging to the search space set s and employing aggregation level $L$.

In one embodiment, the technical feature "the first indication value being used to determine CCE(s) occupied by the first signaling" includes the following meaning: the first indication value is one of W1 indication values, the W1 being a positive integer greater than 1; the W1 indication values are respectively used to determine W1 PDCCH candidate subsets, and each one of the W1 PDCCH candidate subsets comprises at least 1 PDCCH candidate, a PDCCH candidate where the first signaling is detected belongs to one of the W1 PDCCH candidate subsets.

In one embodiment, the technical feature "the first indication value being used to determine CCE(s) occupied by the first signaling" includes the following meaning: the first indication value is one of W1 indication values, and the CCE(s) occupied by the first signaling is(are) CCE(s) occupied by one PDCCH candidate among PDCCH candidates monitored for the W1 indication values.

In one embodiment, the first indication value is one of W1 indication values, the W1 being a positive integer greater than 1; the W1 indication values are respectively used to determine W1 PDCCH candidate subsets, and each one of the W1 PDCCH candidate subsets comprises at least 1 PDCCH candidate, and the first node monitors, with respect to the first signaling, any PDCCH candidate included in each one of the W1 PDCCH candidate subsets.

In one embodiment, the first signaling is used to determine from the target delay set the number of slots between the reference slot and the target slot.

In one embodiment, the target delay set includes only one delay value, and the number of uplink slots between the reference slot and the target slot is equal to the only one delay value included by the target delay set.

## Embodiment 2

Embodiment 2 illustrates a schematic diagram of a network architecture according to the present application, as shown in FIG. 2. FIG. 2 is a diagram illustrating a network architecture 200 of 5G NR, Long-Term Evolution (LTE) and Long-Term Evolution Advanced (LTE-A) systems. The 5G NR or LTE network architecture 200 may be called a 5G System/ Evolved Packet System (5GS/EPS) 200 or other suitable terminology. The 5GS/EPS 200 may comprise one or more UEs 201, an NG-RAN 202, a 5G-Core Network/Evolved Packet Core (5GC/EPC) 210, a Home Subscriber Server/ Unified Data Management (HSS/UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services or other cellular networks. The NG-RAN 202 comprises an NR/evolved node B (gNB/eNB) 203 and other gNB(eNB) 204. The gNB(eNB) 203 provides UE 201 oriented user plane and control plane terminations. The gNB(eNB)203 can be connected to other gNB(eNB) 204 via an Xn/X2 interface (like backhaul). The gNB(eNB)203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB(eNB)203 provides an access point of the 5GC/EPC 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB(eNB)203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/AMFs/SMFs 214, a Service Gateway (S-GW)/User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the gNB(eNB) 203 corresponds to the second node in the present application.

## Embodiment 3

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 used for a first node (UE or gNB) and a second node (gNB or UE) is represented by three layers, which are layer 1, layer 2 and layer 3. The layer 1 (L1) is the lowest layer which performs signal processing functions of various PHY layers. The L1 is called PHY 301 in the present application. The layer 2 (L2) 305 is above the PHY 301, and is in charge of the link between a first node and a second node via the PHY 301. The L2 305 comprises a Medium Access Control (MAC) sublayer 302, a Radio Link Control (RLC) sublayer 303 and a Packet Data Convergence Protocol (PDCP) sublayer 304. All these sublayers terminate at the second nodes. The PDCP sublayer 304 provides multiplexing among variable radio bearers and logical channels. The PDCP sublayer 304 provides security by encrypting packets and also support for inter-cell handover of the first node between second nodes. The RLC sublayer 303 provides segmentation and reassembling of a higher-layer packet, retransmission of a lost packet, and reordering of a packet so as to compensate the disordered receiving caused by Hybrid Automatic Repeat reQuest (HARQ). The MAC sublayer 302 provides multiplexing between a logical channel and a transport channel. The MAC sublayer 302 is also responsible for allocating between first nodes various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling between the second node and the first node. The radio protocol architecture in the user plane 350 comprises the L1 layer and the L2 layer. In the user plane 350, the radio protocol architecture used for the first node and the second node in a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics. Although not described in FIG. 3, the first node may comprise several higher layers above the L2 355, such as a network layer (i.e., IP layer) terminated at a P-GW 213 of the network side and an application layer terminated at the other side of the connection (i.e., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.


## Embodiment 4

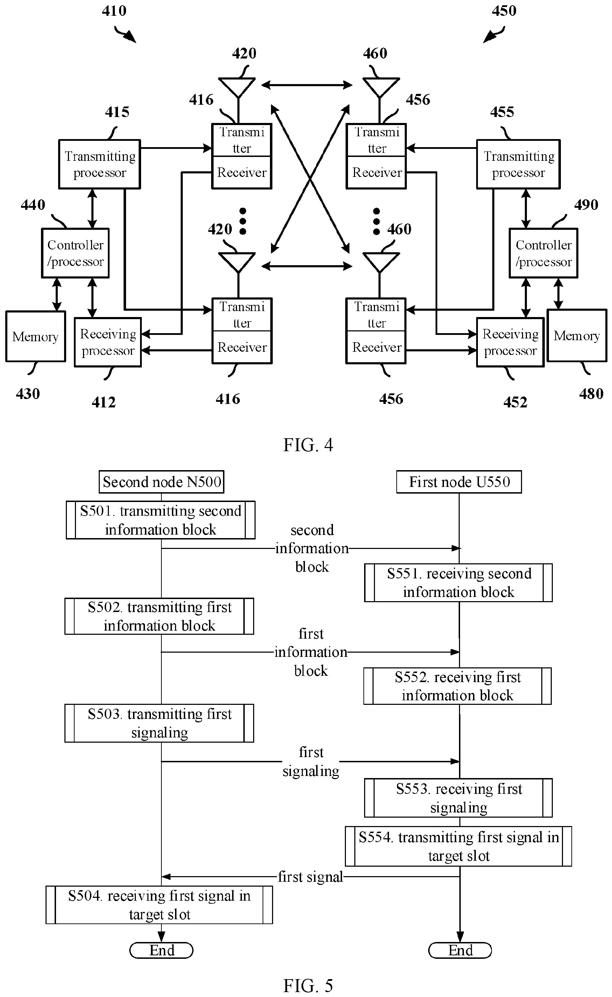

Embodiment 4 illustrates a schematic diagram of a first node and a second node according to one embodiment of the present application, as shown in FIG. 4.

The first node (450) can comprise a controller/processor 490, a data source/buffer 480, a receiving processor 452, a transmitter/receiver 456 and a transmitting processor 455, where the transmitter/receiver 456 comprises an antenna 460.

The second node (410) can comprise a controller/processor 440, a data source/buffer 430, a receiving processor 412, a transmitter/receiver 416 and a transmitting processor 415, where the transmitter/receiver 416 comprises an antenna 420.

In Downlink (DL), a higher layer packet, for instance higher-layer information contained in the first information block and the second information block in the present application is provided to the controller/processor 440. The controller/processor 440 provides functions of the L2 layer and above. In DL, the controller/processor 440 provides header compression, encryption, packet segmentation and reordering, multiplexing between a logical channel and a transport channel as well as radio resources allocation for the first node 450 based on various priorities. The controller/processor 440 is also responsible for HARQ operation, a retransmission of a lost packet and a signaling to the first node 450, for instance, higher-layer information contained in the first information block and the second information block is generated in the controller/processor 440. The transmitting processor 415 performs various signal processing functions used for the L1 (that is, PHY), including coding, interleaving, scrambling, modulating, power control/allocating, pre-coding and physical layer control signaling generation, for example, the generations of a physical-layer signal carrying the first information block and the second information block in the present application and a physical-layer signal corresponding to the first signaling in the present application are completed in the transmitting processor 415. Modulation symbols that have been generated are divided into parallel streams and each of them is mapped onto a corresponding multicarrier subcarrier and/or multicarrier symbol, and then is mapped by the transmitting processor 415 to the antenna 420 via the transmitter 416 to be transmitted in the form of radio frequency signals. At the receiving end, each receiver 456 receives a radio frequency signal via a corresponding antenna 460, and recovers baseband information modulated onto a radio frequency carrier and provides the baseband information to the receiving processor 452. The receiving processor 452 performs various signal receiving processing functions used for the L1. Signal receiving processing functions include receiving of a physical layer signal carrying the first information block and the second information block in the present application and receiving the first signaling, demodulating multicarrier symbols in multicarrier symbol streams based on various modulation schemes (i.e., BPSK, QPSK), then de-scrambling, decoding and de-interleaving to recover data or control signal transmitted by the second node 410 on a physical channel, and providing the data and control signal to the controller/processor 490. The controller/processor 490 is in charge of the L2 and above layers, the controller/processor 490 interprets higher-layer information comprised in the first information block and the second information block in the present application. The controller/processor can be associated with the memory 480 that stores program code and data; the memory 480 may be called a computer readable medium.

In UL transmission, which is similar to DL, higher-layer information, including that contained in the first signal in the present application (if the first signal actually contains higher-layer information), upon generation in the controller/processor 490, is conveyed through the transmitting processor 455 to perform signal transmitting processing functions used for the L1(that is, PHY), for instance, generation of physical layer signals carrying the first signal is completed in the transmitting processor 455, and are then these signals are mapped to the antenna 460 via the transmitter 456 from the transmitting processor 455 and transmitted in the form of radio frequency signals. The receiver 416 receives a radio frequency signal via a corresponding antenna 420, and each receiver 416 recovers baseband information modulated onto a radio frequency carrier and provides the baseband information to the receiving processor 412. The receiving processor 412 performs various signal reception processing functions used for L1 (i.e., PHY), including receiving a physical layer signal carrying the first signal and then providing data and/or control signal to the controller/processor 440. Functions of the L2 performed by the controller/processor 440 include interpreting higher-layer information, including interpreting higher-layer information carried in the first signal (if the first signal actually carries higher-layer information). The controller/processor can be associated with the buffer 430 that stores program code and data; the buffer 430 may be called a computer readable medium.

In one embodiment, the first node 450 comprises at least one processor and at least one memory. The at least one memory comprises computer program codes; the at least one memory and the computer program codes are configured to be used in collaboration with the at least one processor. The first node 450 at least receives a first information block and a second information block, the first information block being used to determine M1 delay sets, each one of the M1 delay sets including at least one delay value, M1 being a positive integer greater than 1; and receives a first signaling, the first signaling being used to determine a first slot, the first slot being used to determine a reference slot; and transmits a first signal in a target slot, the first signal carrying at least one HARQ-ACK bit associated to the first signaling; herein, each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE, and the second information block is used to determine a first indication value, the first indication value being associated to the at least one serving cell for which the first signaling is used for, the first indication value being used to determine CCE(s) occupied by the first signaling.

In one embodiment, the first node 450 comprises a memory that stores a computer readable instruction program. The computer readable instruction program generates actions when executed by at least one processor. The actions include: receiving a first information block and a second information block, the first information block being used to determine M1 delay sets, each one of the M1 delay sets including at least one delay value, M1 being a positive integer greater than 1; and receiving a first signaling, the first signaling being used to determine a first slot, the first slot being used to determine a reference slot; and transmitting a first signal in a target slot, the first signal carrying at least one HARQ-ACK bit associated to the first signaling; herein, each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE, and the second information block is used to determine a first indication value, the first indication value being associated to the at least one serving cell for which the first signaling is used for, the first indication value being used to determine CCE(s) occupied by the first signaling.

In one embodiment, the second node 410 comprises at least one processor and at least one memory. The at least one memory comprises computer program codes; the at least one memory and the computer program codes are configured to be used in collaboration with the at least one processor. The second node 410 at least transmits a first information block and a second information block, the first information block being used to determine M1 delay sets, each one of the M1 delay sets including at least one delay value, M1 being a positive integer greater than 1; and transmits a first signaling, the first signaling being used to determine a first slot, the first slot being used to determine a reference slot; and receives a first signal in a target slot, the first signal carrying at least one HARQ-ACK bit associated to the first signaling; herein, each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE, and the second information block is used to determine a first indication value, the first indication value being associated to the at least one serving cell for which the first signaling is used for, the first indication value being used to determine CCE(s) occupied by the first signaling.

In one embodiment, the second node 410 comprises a memory that stores a computer readable instruction program. The computer readable instruction program generates actions when executed by at least one processor. The actions include: transmitting a first information block and a second information block, the first information block being used to determine M1 delay sets, each one of the M1 delay sets including at least one delay value, M1 being a positive integer greater than 1; and transmitting a first signaling, the first signaling being used to determine a first slot, the first slot being used to determine a reference slot; and receiving a first signal in a target slot, the first signal carrying at least one HARQ-ACK bit associated to the first signaling; herein, each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE, and the second information block is used to determine a first indication value, the first indication value being associated to the at least one serving cell for which the first signaling is used for, the first indication value being used to determine CCE(s) occupied by the first signaling.

In one embodiment, the first node 450 is a UE.

In one embodiment, the second node 410 is a base station (gNB/eNB).

In one embodiment, the receiver 456 (comprising the antenna 460), the receiving processor 452 and the controller/processor 490 are used for receiving the first information block and the second information block in the present application.

In one embodiment, the receiver 456 (comprising the antenna 460) and the receiving processor 452 are used for receiving the first signaling in the present application.

In one embodiment, the transmitter 456 (comprising the antenna 460), the transmitting processor 455 and the controller/processor 490 are used for transmitting the first signal in the present application.

In one embodiment, the transmitter 456 (comprising the antenna 460) and the transmitting processor 455 are used for transmitting the first signal in the present application.

In one embodiment, the transmitter 416 (comprising the antenna 420), the transmitting processor 415 and the controller/processor 440 are used for transmitting the first information block and the second information block in the present application.

In one embodiment, the transmitter 416 (comprising the antenna 420) and the transmitting processor 415 are used for transmitting the first signaling in the present application.

In one embodiment, the receiver 416 (comprising the antenna 420), the receiving processor 412 and the controller/processor 440 are used for receiving the first signal in the present application.

In one embodiment, the receiver 416 (comprising the antenna 420) and the receiving processor 412 are used for receiving the first signal in the present application.

## Embodiment 5

Embodiment 5 illustrates a flowchart of radio signal transmission according to one embodiment of the present application, as shown in FIG. 5. In FIG. 5, a second node N500 is a maintenance base station for a serving cell for a first node U550. It should be particularly noted that the sequence illustrated herein does not set any limit to the signal transmission order or implementation order in the present application.

The **second node N500** transmits a second information block in step S501, transmits a first information block in step S502, and transmits a first signaling in step S503, and receives a first signal in a target slot in step S504.

The **first node U550** receives a second information block in step S551, receives a first information block in step S552, and receives a first signaling in step S553, and transmits a first signal in a target slot in step S554.

In Embodiment 5, the first information block is used to determine M1 delay sets, each one of the M1 delay sets including at least one delay value, M1 being a positive integer greater than 1; the first signaling is used to determine a first slot, the first slot being used to determine a reference slot; and the first signal carries at least one HARQ-ACK bit associated to the first signaling; each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE, and the second information block is used to determine a first indication value, the first indication value being associated to the at least one serving cell for which the first signaling is used for, the first indication value being used to determine CCE(s) occupied by the first signaling.

## Embodiment 6

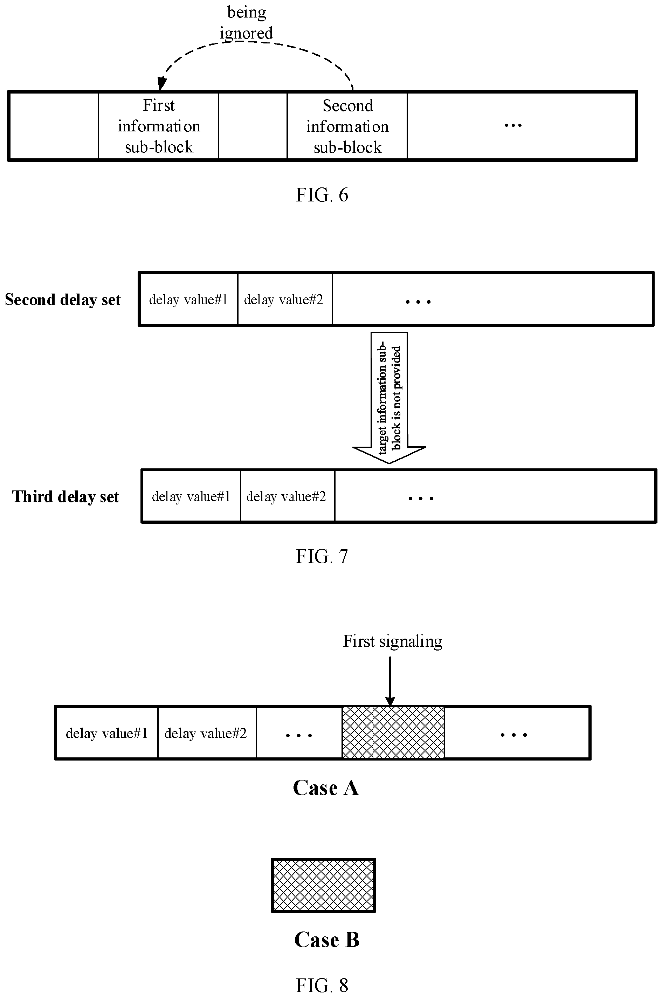

Embodiment 6 illustrates a schematic diagram of a relation between a first information sub-block and a second information sub-block according to one embodiment of the present application, as shown in FIG. 6. In FIG. 6, a thick line framed rectangle represents a first information block, and two thin line framed rectangles within the thick line framed rectangle represent a first information sub-block and a second information sub-block, respectively, and a dashed line with an arrow indicates that the second information sub-block is used to determine that the first information sub-block is ignored.

In Embodiment 6, a first information sub-block is an information sub-block included by the first information block in the present application, and the first information sub-block is used to determine a first delay set, the first delay set including at least one delay value; whether the first information block includes a second information sub-block is used to determine whether the M1 delay sets in the present application include the first delay set, the second information sub-block being an information sub-block other than the first information sub-block.

In one embodiment, the first information block comprises only the first information sub-block.

In one embodiment, the first information block further comprises information sub-block(s) other than the first information sub-block.

In one embodiment, the first information sub-block comprises 1 or more fields of the first information block.

In one embodiment, the first information sub-block comprises IE(s) indicated by 1 or more fields in the first information block.

In one embodiment, the first information sub-block includes an IE set up or released by one field included in the first information block.

In one embodiment, the first information sub-block comprises one or more IEs of the first information block.

In one embodiment, the first information sub-block comprises a "dl-DataToUL-ACK" field.

In one embodiment, the first information sub-block comprises a "dl-DataToUL-ACK-r16" field.

In one embodiment, the first information sub-block comprises a "dl-DataToUL-ACK-DCI-1-2" field.

In one embodiment, the first information sub-block comprises a "dl-DataToUL-ACK-DCI-1-2-r17" field.

In one embodiment, the first information sub-block comprises a "dl-DataToUL-ACK-r17" field.

In one embodiment, the technical feature "the first information sub-block is used to determine a first delay set" includes the following meaning: the first information sub-block is used by the first node in the present application to determine the first delay set.

In one embodiment, the technical feature "the first information sub-block is used to determine a first delay set" includes the following meaning: all or part of the first information sub-block is used to explicitly or implicitly indicate the first delay set.

In one embodiment, the technical feature "the first information sub-block is used to determine a first delay set" includes the following meaning: all or part of the first information sub-block is used to explicitly or implicitly indicate all or some of the delay values included by the first delay set.

In one embodiment, the technical feature "the first information sub-block is used to determine a first delay set" includes the following meaning: the first information sub-block is used to add delay values to or release delay values from the first delay set.

In one embodiment, the first delay set includes only one delay value.

In one embodiment, the first delay set includes a plurality of delay values.

In one embodiment, each delay value included in the first delay set is an integer.

In one embodiment, the first information block may or may not include the second information sub-block.

In one embodiment, when the first information block includes the second information sub-block, the first information block further includes an information sub-block other than the first information sub-block or the second information sub-block.

In one embodiment, when the first information block includes the second information sub-block, the first information block includes only the first information sub-block and the second information sub-block.

In one embodiment, when the first information block includes the second information sub-block, the second information sub-block is 1 field in the first information block.

In one embodiment, when the first information block includes the second information sub-block, the second information sub-block is an IE indicated by one or more fields in the first information block.

In one embodiment, when the first information block includes the second information sub-block, the second information sub-block is an IE set up or released by one field included in the first information block.

In one embodiment, when the first information block does not include the second information sub-block, the first node in the present application considers that the second information sub-block is not provided.

In one embodiment, the second information sub-block comprises a "dl-DataToUL-ACK-r16" field.

In one embodiment, the second information sub-block comprises a "dl-DataToUL-ACK-DCI-1-2" field.

In one embodiment, the second information sub-block comprises a "dl-DataToUL-ACK-DCI-1-2-r17" field.

In one embodiment, the second information sub-block comprises a "dl-DataToUL-ACK-r17" field.

In one embodiment, the second information sub-block comprises a "dl-DataToUL-ACK-r18" field.

In one embodiment, the second information sub-block comprises a "dl-DataToUL-ACK-v1800" field.

In one embodiment, the second information sub-block comprises a "dl-DataToUL-ACK-DCI-1-$\Phi$-r18" field, where "DCI-1-$\Phi$" corresponds to a DCI format 1_$\Phi$. In one subsidiary embodiment of the above embodiment, the $\Phi$ is equal to 3. In one subsidiary embodiment of the above embodiment, the $\Phi$ is equal to 4. In one subsidiary embodiment of the above embodiment, the $\Phi$ is equal to 5. In one subsidiary embodiment of the above embodiment, the $\Phi$ represents a letter.

In one embodiment, the first information sub-block is different from the second information sub-block.

In one embodiment, the first information sub-block and the second information sub-block are independent from each other.

In one embodiment, when the first information block includes the second information sub-block, the first information sub-block and the second information sub-block are two separate fields or two separate IEs in the first information block.

In one embodiment, "the first information block includes the second information sub-block" and "the second information sub-block is provided" are equivalent or used interchangeably.

In one embodiment, "the first information block does not include the second information sub-block" and "the second information sub-block is not provided" are equivalent or used interchangeably.

In one embodiment, the technical feature "whether the first information block includes a second information sub-block is used to determine whether the M1 delay sets include the first delay set" comprises that whether or not the first information block includes a second information sub-block is used by the first node in the present application to determine whether or not the M1 delay sets include the first delay set.

In one embodiment, the technical feature "whether the first information block includes a second information sub-block is used to determine whether the M1 delay sets include the first delay set" comprises that when the first information block includes a second information sub-block, the first delay set is one of the M1 delay sets.

In one embodiment, the technical feature "whether the first information block includes a second information sub-block is used to determine whether the M1 delay sets include the first delay set" comprises that when the first information block includes a second information sub-block, the first delay set is not one of the M1 delay sets.

In one embodiment, the technical feature "whether the first information block includes a second information sub-block is used to determine whether the M1 delay sets include the first delay set" comprises that when the first information block includes a second information sub-block, the first delay set is one of the M1 delay sets; otherwise, the first delay set is not one of the M1 delay sets.

In one embodiment, the technical feature "whether the first information block includes a second information sub-block is used to determine whether the M1 delay sets include the first delay set" comprises that when the first information block includes a second information sub-block, the first delay set is not one of the M1 delay sets; otherwise, the first delay set is one of the M1 delay sets.

In one embodiment, the technical feature "whether the first information block includes a second information sub-block is used to determine whether the M1 delay sets include the first delay set" comprises that when the first information block includes a second information sub-block, the first information sub-block is ignored.

In one embodiment, the technical feature "whether the first information block includes a second information sub-block is used to determine whether the M1 delay sets include the first delay set" comprises that when the first information block includes a second information sub-block, the first delay set is ignored.

In one embodiment, when the first information block includes a second information sub-block, the second information sub-block applies to a DCI format 1_1 and a DCI format 1_$\Phi$, where $\Phi$ is a positive integer greater than 2 or a letter. In one subsidiary embodiment of the above embodiment, the $\Phi$ is equal to 3. In one subsidiary embodiment of the above embodiment, the $\Phi$ is equal to 4. In one subsidiary embodiment of the above embodiment, the $\Phi$ is equal to 5.

In one embodiment, when a second information sub-block is included in the first information block, the second information sub-block is used to explicitly or implicitly indicate a delay set of the M1 delay sets.

In one embodiment, when a second information sub-block is included in the first information block, the delay set indicated by the second information sub-block is a delay set among the M1 delay sets.

## Embodiment 7

Embodiment 7 illustrates a schematic diagram of a relation between a second delay set and a third delay set according to one embodiment of the present application, as shown in FIG. 7. In FIG. 7, the upper and lower thick line framed rectangles represent a second delay set and a third delay set, respectively, each thin line framed rectangle in the thick line framed rectangles represents a delay value included in the corresponding delay set, and the arrows represent the relationship of substitution.

In Embodiment 7, a target information sub-block is used to determine a second delay set; when the first information block of the present application includes the target information sub-block, the M1 delay sets of the present application include the second delay set; otherwise, the M1 delay sets include a third delay set, the third delay set being pre-defined.

In one embodiment, the first information block may or may not include the target information sub-block.

In one embodiment, when the first information block includes the target information sub-block, the target information sub-block is 1 field in the first information block.

In one embodiment, when the first information block includes the target information sub-block, the target information sub-block is an IE indicated by one or more fields in the first information block.

In one embodiment, when the first information block includes the target information sub-block, the target information sub-block is an IE set up or released by one field included in the first information block.

In one embodiment, when the first information block does not include the target information sub-block, the first node in the present application considers that the target information sub-block is not provided.

In one embodiment, "the first information block includes the target information sub-block" and "the target information sub-block is provided" are equivalent or used interchangeably.

In one embodiment, "the first information block does not include the target information sub-block" and "the target information sub-block is not provided" are equivalent or used interchangeably.

In one embodiment, the target information sub-block and the second information sub-block of this application are the same information sub-block.

In one embodiment, the target information sub-block and the second information sub-block of this application are two information sub-blocks.

In one embodiment, the target information sub-block and the second information sub-block of this application are identical to each other.

In one embodiment, the target information sub-block and the second information sub-block of this application are different from each other.

In one embodiment, the target information sub-block and the second information sub-block of this application are two separate information sub-blocks in the first information block.

In one embodiment, the target information sub-block comprises a "dl-DataToUL-ACK-r18" field.

In one embodiment, the target information sub-block comprises a "dl-DataToUL-ACK-v1800" field.

In one embodiment, the target information sub-block comprises a "dl-DataToUL-ACK-DCI-1-$\Phi$-r18" field, where "DCI-1-$\Phi$" corresponds to a DCI format 1_$\Phi$. In one subsidiary embodiment of the above embodiment, the $\Phi$ is equal to 3. In one subsidiary embodiment of the above embodiment, the $\Phi$ is equal to 4. In one subsidiary embodiment of the above embodiment, the $\Phi$ is equal to 5. In one subsidiary embodiment of the above embodiment, the $\Phi$ represents a letter.

In one embodiment, the technical feature "a target information sub-block is used to determine a second delay set" includes the following meaning: the target information sub-block is used by the first node in the present application to determine the second delay set.

In one embodiment, the technical feature "a target information sub-block is used to determine a second delay set" includes the following meaning: all or part of the target information sub-block is used to explicitly or implicitly indicate the second delay set.

In one embodiment, the technical feature "a target information sub-block is used to determine a second delay set" includes the following meaning: all or part of the target information sub-block is used to explicitly or implicitly indicate all or some of the delay values included by the second delay set.

In one embodiment, the technical feature "a target information sub-block is used to determine a second delay set" includes the following meaning: the target information sub-block is used to add delay values to or release delay values from the second delay set.

In one embodiment, the second delay set includes only one delay value.

In one embodiment, the second delay set includes a plurality of delay values.

In one embodiment, each delay value included in the second delay set is an integer.

In one embodiment, the third delay set includes only one delay value.

In one embodiment, the third delay set includes a plurality of delay values.

In one embodiment, each delay value included in the third delay set is an integer.

In one embodiment, the technical feature "the third delay set being pre-defined" comprises the meaning that the third delay set is fixed.

In one embodiment, the technical feature "the third delay set being pre-defined" comprises the meaning that the third delay set is hard coded in the protocol.

In one embodiment, the technical feature "the third delay set being pre-defined" comprises the meaning that the third delay set is {1, 2, 3, 4, 5, 6, 7, 8}.

In one embodiment, the second delay set may or may not be the same as the third delay set.

In one embodiment, whether or not the second delay set and the third delay set are the same is determined by the target information sub-block.

In one embodiment, when the first information block includes the target information sub-block, the M1 delay sets may or may not include the third delay set.

In one embodiment, when the first information block does not include the target information sub-block, the M1 delay sets do not include the second delay set.

In one embodiment, when the number of serving cells for which the first signaling is used is greater than 1, the target delay set is one of the second delay set or the third delay set.

In one embodiment, when the first signaling carries a DCI format capable of simultaneously scheduling multiple serving cells, the target delay set is one of the second delay set or the third delay set.

## Embodiment 8

Embodiment 8 illustrates a schematic diagram of a target delay set according to one embodiment of the present application, as shown in FIG. 8. In FIG. 8, as given in both Case A and Case B, the thick line framed rectangles represent the target delay set, and the cross-hatched rectangles represent a delay value equal to the number of slots between the reference slot and the target slot; in Case A each of the thin line framed rectangles in the thick line framed rectangles represents a delay value included in the target delay set; and in Case B the target delay set includes only one delay value.

In Embodiment 8, when the target delay set of the present application includes multiple delay values, the first signaling of the present application is used to determine from the target delay set the number of slots between the reference slot of the present application and the target slot of the present application; when the target delay set includes only one delay value, the number of slots between the reference slot and the target slot is equal to the only one delay value included by the target delay set.

In one embodiment, the technical feature "the first signaling is used to determine from the target delay set the number of slots between the reference slot and the target slot" comprises the meaning that the first signaling is used by the first node of the present application to determine a number of slots between the reference slot and the target slot from the target delay set.

In one embodiment, the technical feature "the first signaling is used to determine from the target delay set the number of slots between the reference slot and the target slot" comprises the meaning that all or part of the first signaling is used to indicate, explicitly or implicitly, a number of slots between the reference slot and the target slot from the target delay set.

In one embodiment, the technical feature "the first signaling is used to determine from the target delay set the number of slots between the reference slot and the target slot" comprises the meaning that a field included by the first signaling is used to determine a number of slots between the reference slot and the target slot from the target delay set.

In one embodiment, the technical feature "the first signaling is used to determine from the target delay set the number of slots between the reference slot and the target slot" comprises the meaning that the first signaling is used to indicate an index of a number of slots between the reference slot and the target slot in the target delay set.

In one embodiment, a number of bits included by one field in the first signaling is equal to the logarithmic value of the number of delay values included in the target delay set with a base of 2.

In one embodiment, a number of bits included by one field in the first signaling is equal to an upwardly rounded value for the logarithmic value of the number of delay values included in the target delay set with a base of 2.

## Embodiment 9

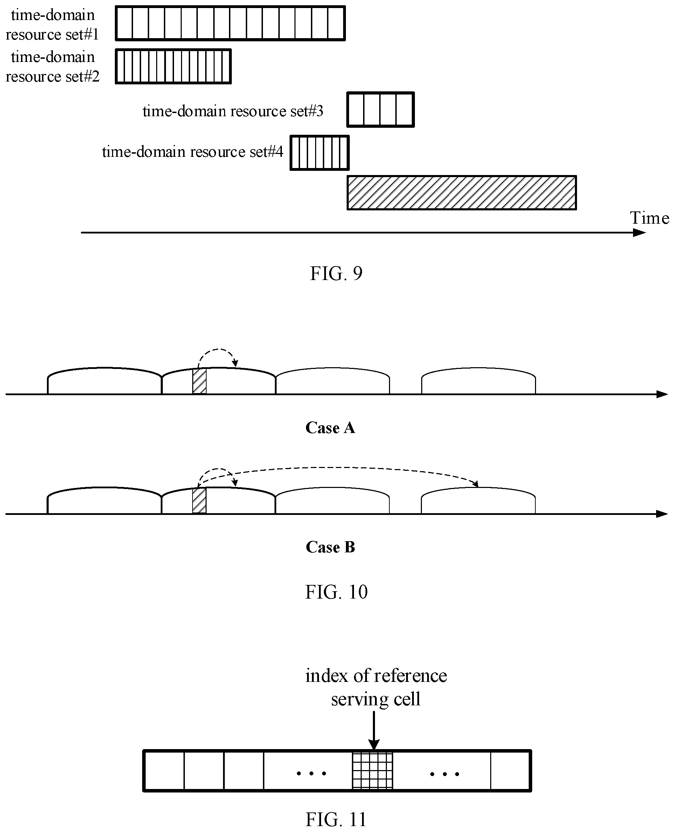

Embodiment 9 illustrates a schematic diagram of a first slot according to one embodiment of the present application, as shown in FIG. 9. In FIG. 9, the horizontal axis represents time, each thick line framed unfilled rectangle represents a time-domain resource set, and each thin line framed rectangle in the thick line framed unfilled rectangle represents a time-domain symbol included in a corresponding time-domain resource set; the diagonally-filled rectangle represents a first slot.

In Embodiment 9, the first signaling of the present application is used to determine multiple time-domain resource sets, each one of the multiple time-domain resource sets including at least one time-domain symbol; the first slot of the present application is a downlink slot that overlaps in time domain with a latest time-domain symbol included by the multiple time-domain resource sets.

In one embodiment, the technical feature "the first signaling is used to determine multiple time-domain resource sets" includes the following meaning: the first signaling is used by the first node of the present application to determine the multiple time-domain resource sets.

In one embodiment, the technical feature "the first signaling is used to determine multiple time-domain resource sets" includes the following meaning: all or part of the first signaling is used to explicitly or implicitly indicate the multiple time-domain resource sets.

In one embodiment, the technical feature "the first signaling is used to determine multiple time-domain resource sets" includes the following meaning: the first signaling is used to schedule multiple PDSCHs, the multiple PDSCHs respectively occupying the multiple time-domain resource sets in the time domain.

In one embodiment, the technical feature "the first signaling is used to determine multiple time-domain resource sets" includes the following meaning: the first signaling is used to determine all or part of the multiple time-domain resource sets.

In one embodiment, the technical feature "the first signaling is used to determine multiple time-domain resource sets" includes the following meaning: only one field in the first signaling is used to determine the multiple time-domain resource sets.

In one embodiment, the technical feature "the first signaling is used to determine multiple time-domain resource sets" includes the following meaning: multiple fields in the first signaling are used to determine the multiple time-domain resource sets, respectively.

In one embodiment, the technical feature "the first signaling is used to determine multiple time-domain resource sets" includes the following meaning: a higher-layer signaling or higher-layer parameter is used to determine the multiple time-domain resource sets, and the first signaling is used for release of the multiple time-domain resource sets.

In one embodiment, the technical feature "the first signaling is used to determine multiple time-domain resource sets" includes the following meaning: a higher-layer signaling or higher-layer parameter is used to determine the multiple time-domain resource sets, and the first signaling is used for release of SPS PDSCHs associated with the multiple time-domain resource sets.

In one embodiment, each one of the multiple time-domain resource sets comprises continuous time-domain symbols.

In one embodiment, there exists one time-domain resource set among the multiple time-domain resource sets comprising discrete time-domain symbols.

In one embodiment, each one of the multiple time-domain resource sets comprises multiple time-domain symbols.

In one embodiment, there exists one time-domain resource set among the multiple time-domain resource sets comprising only 1 time-domain symbol.

In one embodiment, there are two time-domain resource sets being the same among the multiple time-domain resource sets.

In one embodiment, any two time-domain resource sets are different among the multiple time-domain resource sets.

In one embodiment, time-domain symbols respectively included by any two time-domain resource sets among the multiple time-domain resource sets correspond to equal subcarrier spacings.

In one embodiment, there are two time-domain resource sets among the multiple time-domain resource sets respectively including time-domain symbols that correspond to unequal subcarrier spacings.

In one embodiment, the technical feature "the first slot is a downlink slot that overlaps in time domain with a latest time-domain symbol included by the multiple time-domain resource sets" includes the following meaning: the first slot is a slot partially or fully overlapping in time domain with the latest time-domain symbol included in a time-domain resource set with the latest end time among the multiple time-domain resource sets.

In one embodiment, the technical feature "the first slot is a downlink slot that overlaps in time domain with a latest time-domain symbol included by the multiple time-domain resource sets" includes the following meaning: a target time-domain symbol is a time-domain symbol included by one of the multiple time-domain resource sets, and an end time of any time-domain symbol included by each one of the multiple time-domain resource sets is not later than an end time of the target time-domain symbol, the first slot being a downlink slot that overlaps with the target time-domain symbol in time domain.

In one embodiment, the technical feature "the first slot is a downlink slot that overlaps in time domain with a latest time-domain symbol included by the multiple time-domain resource sets" includes the following meaning: a target time-domain symbol is a time-domain symbol included by one of the multiple time-domain resource sets, and an end time of any time-domain symbol included by each one of the multiple time-domain resource sets is not later than an end time of the target time-domain symbol, and the first slot is a downlink slot that comprises the target time-domain symbol, the first slot and the target time-domain symbol corresponding to the same subcarrier spacing.

In one embodiment, the technical feature "the first slot is a downlink slot that overlaps in time domain with a latest time-domain symbol included by the multiple time-domain resource sets" includes the following meaning: the first slot is a downlink slot partially overlapping or fully overlapping in time domain with a PDSCH with the latest end time among multiple PDSCHs, the multiple PDSCHs respectively occupying the multiple time-domain resource sets in time domain.

In one embodiment, the technical feature "the first slot is a downlink slot that overlaps in time domain with a latest time-domain symbol included by the multiple time-domain resource sets" includes the following meaning: the first slot is a downlink slot at the end of reception of a PDSCH with the latest reception end time among multiple PDSCHs, the multiple PDSCHs respectively occupying the multiple time-domain resource sets in time domain.

In one embodiment, the technical feature "the first slot is a downlink slot that overlaps in time domain with a latest time-domain symbol included by the multiple time-domain resource sets" includes the following meaning: the first slot is a downlink slot at the end of reception of a PDSCH with the latest reception end time among multiple PDSCHs, and a subcarrier spacing corresponding to the first slot is equal to a subcarrier spacing of a subcarrier occupied in frequency domain by a PDSCH with the latest reception end time among the multiple PDSCHs, the multiple PDSCHs respectively occupying the multiple time-domain resource sets in time domain.

**Embodiment 10**

Embodiment 10 illustrates a schematic diagram of the number of serving cells for which a first signaling is used according to one embodiment of the present application, as shown in FIG. 10. In FIG. 10, each arc-top unfilled area represents a serving cell, the diagonally filled area represents the first signaling, and the dashed line with an arrow represents the relationship of being applied; in case A, the first signaling is used only for one serving cell; in case B, the first signaling is used for a plurality of serving cells.

In Embodiment 10, the first signaling of the present application is used to determine a number of serving cells for which the first signaling is used; when the number of serving cells for which the first signaling is used is greater than 1, the target delay set of the present application is one of the M1 delay sets of the present application; otherwise, the target delay set is another one of the M1 delay sets.

In one embodiment, the technical feature "the first signaling is used to determine a number of serving cell(s) for which the first signaling is used" includes the following meaning: the first signaling is used by the first node of the present application to determine the number of serving cell(s) for which the first signaling is used.

In one embodiment, the technical feature "the first signaling is used to determine a number of serving cell(s) for which the first signaling is used" includes the following meaning: all or part of fields comprised in the first signaling are used to explicitly or implicitly indicate the number of serving cell(s) for which the first signaling is used.

In one embodiment, the technical feature "the first signaling is used to determine a number of serving cell(s) for which the first signaling is used" includes the following meaning: all or part of fields comprised in the first signaling are used to explicitly or implicitly indicate each serving cell for which the first signaling is used.

In one embodiment, the technical feature "the first signaling is used to determine a number of serving cell(s) for which the first signaling is used" includes the following meaning: all or part of fields comprised in the first signaling are used to explicitly or implicitly indicate a set of serving cells consisting of all serving cells for which the first signaling is used.

In one embodiment, the technical feature "the first signaling is used to determine a number of serving cell(s) for which the first signaling is used" includes the following meaning: a DCI format carried by the first signaling is used to determine the number of serving cell(s) for which the first signaling is used.

In one embodiment, the technical feature "the first signaling is used to determine a number of serving cell(s) for which the first signaling is used" includes the following meaning: a DCI format carried by the first signaling is used to determine whether the number of serving cell(s) for which the first signaling is used is greater than 1.

In one embodiment, the technical feature "the first signaling is used to determine a number of serving cell(s) for which the first signaling is used" includes the following meaning: when a DCI format carried by the first signaling is capable of scheduling PDSCHs on multiple serving cells simultaneously, the number of serving cell(s) for which the first signaling is used is greater than 1; otherwise, the number of serving cell(s) for which the first signaling is used is equal to 1.

In one embodiment, the technical feature "the first signaling is used to determine a number of serving cell(s) for which the first signaling is used" includes the following meaning: when a DCI format carried by the first signaling is DCI format 1_$\Phi$, the number of serving cell(s) for which the first signaling is used is greater than 1; otherwise, the number of serving cell(s) for which the first signaling is used is equal to 1; the $\Phi$ is a positive integer greater than 2 or represents a letter. In one subsidiary embodiment of the above embodiment, the $\Phi$ is equal to 3. In one subsidiary embodiment of the above embodiment, the $\Phi$ is equal to 4. In one subsidiary embodiment of the above embodiment, the $\Phi$ is equal to 5.

In one embodiment, "the number of serving cell(s) for which the first signaling is used is greater than 1" and "a DCI format carried by the first signaling is capable of scheduling PDSCHs on multiple serving cells simultaneously" are equivalent or used interchangeably.

In one embodiment, "the number of serving cell(s) for which the first signaling is used is greater than 1" and "the first signaling is capable of scheduling PDSCHs on multiple serving cells simultaneously" are equivalent or used interchangeably.

In one embodiment, "the number of serving cell(s) for which the first signaling is used is greater than 1" and "the first signaling is configured by a higher-layer signaling or higher-layer parameter to schedule PDSCHs on multiple serving cells simultaneously" are equivalent or used interchangeably.

In one embodiment, "the number of serving cell(s) for which the first signaling is used is greater than 1" and "the first signaling carries a DCI format 1_$\Phi$" are equivalent or used interchangeably, where the $\Phi$ is a positive integer greater than 2 or represents a letter.. In one subsidiary embodiment of the above embodiment, the $\Phi$ is equal to 3. In one subsidiary embodiment of the above embodiment, the $\Phi$ is equal to 4. In one subsidiary embodiment of the above embodiment, the $\Phi$ is equal to 5.

In one embodiment, when the number of serving cells for which the first signaling is used is greater than 1, the target delay set is the second delay set in this application; otherwise, the target delay set is a delay set other than the second delay set among the M1 delay sets.

In one embodiment, when the number of serving cells for which the first signaling is used is greater than 1, the target delay set is the third delay set in this application; otherwise, the target delay set is a delay set other than the third delay set among the M1 delay sets.

In one embodiment, when the number of serving cells for which the first signaling is used is greater than 1, the target delay set is the second delay set or the third delay set in this application; otherwise, the target delay set is a delay set other than the second delay set or the third delay set among the M1 delay sets.

In one embodiment, when the number of serving cells for which the first signaling is used is greater than 1, the target delay set is one of the M1 delay sets; otherwise, the target delay set is another latest version of delay set of the M1 delay sets.

In one embodiment, when the number of serving cells for which the first signaling is used is greater than 1, the target delay set is one of the M1 delay sets that is indicated or predefined by a "dl-DataToUL-ACK-DCI-1-$\Phi$-r18" field; otherwise, the target delay set is one of the M1 delay sets that is indicated by a "dl-DataToUL-ACK-r16" field or a "dl-DataToUL-ACK-r17" field. In one subsidiary embodiment of the above embodiment, the $\Phi$ is equal to 3. In one subsidiary embodiment of the above embodiment, the $\Phi$ is equal to 4. In one subsidiary embodiment of the above embodiment, the $\Phi$ is equal to 5. In one subsidiary embodiment of the above embodiment, the $\Phi$ represents a letter.

In one embodiment, when the number of serving cells for which the first signaling is used is greater than 1, the target delay set is one of the M1 delay sets that is indicated or predefined by a "dl-DataToUL-ACK-r18" field or a "dl-DataToUL-ACK-v1800" field; otherwise, the target delay set is one of the M1 delay sets that is indicated by a "dl-DataToUL-ACK-r16" field or a "dl-DataToUL-ACK-r17" field.

In one embodiment, when the number of serving cells for which the first signaling is used is greater than 1, the target delay set is one of the M1 delay sets that is indicated or predefined by a "dl-DataToUL-ACK-DCI-1-$\Phi$-r18" field; otherwise, whether a "dl-DataToUL-ACK-r16" field or a "dl-DataToUL-ACK-r17" field is provided or not is used to determine the target delay set. In one subsidiary embodiment of the above embodiment, the $\Phi$ is equal to 3. In one subsidiary embodiment of the above embodiment, the $\Phi$ is equal to 4. In one subsidiary embodiment of the above embodiment, the $\Phi$ is equal to 5. In one subsidiary embodiment of the above embodiment, the $\Phi$ represents a letter.

In one embodiment, when the number of serving cells for which the first signaling is used is greater than 1, the target delay set is one of the M1 delay sets that is indicated or predefined by a "dl-DataToUL-ACK-r18" field or a "dl-DataToUL-ACK-v1800" field; otherwise, whether a "dl-DataToUL-ACK-r16" field or a "dl-DataToUL-ACK-r17" field is provided or not is used to determine the target delay set.

## Embodiment 11

Embodiment 11 illustrates a schematic diagram of a target HARQ bit according to one embodiment of the present application, as shown in FIG. 11. In FIG. 11, the rectangle framed by thick lines represents the first HARQ bit block, each square in the rectangle framed by thick lines represents a bit in the first HARQ bit block, and the crosswire-filled square represents the target HARQ bit.

In Embodiment 11, the first signal of the present application carries a first HARQ bit block, the first HARQ bit block including multiple HARQ-ACK bits; a detection of the first signaling of the present application is used to determine a bit value of a target HARQ bit, the target HARQ bit belongs to the first HARQ bit block, and an index of a reference serving cell is used to determine a position of the target HARQ bit in the first HARQ bit block; the first signaling is used for multiple serving cells, the reference serving cell being a serving cell to which the first signaling belongs or the reference serving cell being a pre-defined serving cell among the multiple serving cells.

In one embodiment, the first HARQ bit block is a HARQ-ACK codebook.

In one embodiment, the first HARQ bit block is a HARQ-ACK sub-codebook.

In one embodiment, the first HARQ bit block is a Type1 or Type2 or Type3 HARQ-ACK Codebook.

In one embodiment, the first HARQ bit block is transmitted on the first signal.

In one embodiment, the first HARQ bit block is carried by the first signal as information bits.

In one embodiment, the first HARQ bit block is used to generate UCI bits carried by the first signal.

In one embodiment, the first HARQ bit block is included in UCI bits carried by the first signal.

In one embodiment, UCI bits comprising the first HARQ bit block are used to generate the first signal.

In one embodiment, any HARQ-ACK bit included in the first HARQ bit block is an information bit.

In one embodiment, any HARQ-ACK bit included in the first HARQ bit block is an uncoded HARQ-ACK bit.

In one embodiment, any HARQ-ACK bit included in the first HARQ bit block is a coded HARQ-ACK bit.

In one embodiment, the first HARQ bit block comprises multiple HARQ-ACK codebooks.

In one embodiment, the first HARQ bit block comprises only 1 HARQ-ACK codebook.

In one embodiment, the first HARQ bit block is one of multiple HARQ-ACK codebooks carried by the first signal.

In one embodiment, the first signal carries only one HARQ-ACK codebook.

In one embodiment, the first signal carries multiple HARQ-ACK codebooks.

In one embodiment, the target HARQ bit has a bit value equal to "ACK".

In one embodiment, the target HARQ bit has a bit value equal to "1".

In one embodiment, the technical feature "a detection of the first signaling is used to determine a bit value of a target HARQ bit" includes the following meaning: the detection of the first signaling is used by the first node of the present application to determine the bit value of the target HARQ bit.

In one embodiment, the technical feature "a detection of the first signaling is used to determine a bit value of a target HARQ bit" includes the following meaning: upon the detection of the first signaling, the first node generates an "ACK" as the bit value of the target HARQ bit.

In one embodiment, the technical feature "a detection of the first signaling is used to determine a bit value of a target HARQ bit" includes the following meaning: upon the detection of the first signaling, the bit value of the target HARQ bit is equal to "1".

In one embodiment, the technical feature "a detection of the first signaling is used to determine a bit value of a target HARQ bit" includes the following meaning: upon the detection of the first signaling, the bit value of the target HARQ bit is equal to "1"; otherwise, the bit value of the target HARQ bit is equal to "0".

In one embodiment, the technical feature "a detection of the first signaling is used to determine a bit value of a target HARQ bit" includes the following meaning: whether the first signaling has been successfully detected is used to determine the bit value of the target HARQ bit.

In one embodiment, the technical feature "a detection of the first signaling is used to determine a bit value of a target HARQ bit" includes the following meaning: a successful decoding of the first signaling is used to determine the bit value of the target HARQ bit.

In one embodiment, the technical feature "a detection of the first signaling is used to determine a bit value of a target HARQ bit" includes the following meaning: the detection of the first signaling is used to determine that the bit value of the target HARQ bit is equal to "1".

In one embodiment, the target HARQ bit is a HARQ bit included in the first HARQ bit block.

In one embodiment, the first HARQ bit block includes the target HARQ bit.

In one embodiment, an index of a reference serving cell is a serving cell index of the reference serving cell.

In one embodiment, an index of a reference serving cell is an identifier of the reference serving cell.

In one embodiment, an index of a reference serving cell is equal to a non-negative integer.

In one embodiment, an index of a reference serving cell is a positive integer.

In one embodiment, a position of the target HARQ bit in the first HARQ bit block is an index of the target HARQ bit in the first HARQ bit block.

In one embodiment, a position of the target HARQ bit in the first HARQ bit block is an order of the target HARQ bit in the first HARQ bit block.

In one embodiment, with bits in the first HARQ bit block being sequentially indexed, a position of the target HARQ bit in the first HARQ bit block is an index of the target HARQ bit in the first HARQ bit block.

In one embodiment, the technical feature "an index of a reference serving cell is used to determine a position of the target HARQ bit in the first HARQ bit block" includes the following meaning: the index of the reference serving cell is used by the first node or the second node of the present application to determine the position of the target HARQ bit in the first HARQ bit block.

In one embodiment, the technical feature "an index of a reference serving cell is used to determine a position of the target HARQ bit in the first HARQ bit block" includes the following meaning: the index of the reference serving cell is used to determine the position of the target HARQ bit in the first HARQ bit block based on the generation of a HARQ-ACK codebook.

In one embodiment, the technical feature "an index of a reference serving cell is used to determine a position of the target HARQ bit in the first HARQ bit block" includes the following meaning: the index of the reference serving cell is used to obtain the position of the target HARQ bit in the first HARQ bit block based on the process of determining a Type1 HARQ-ACK codebook.

In one embodiment, the technical feature "an index of a reference serving cell is used to determine a position of the target HARQ bit in the first HARQ bit block" includes the following meaning: the index of the reference serving cell is used to obtain the position of the target HARQ bit in the first HARQ bit block based on the process of determining a Type2 HARQ-ACK codebook.

In one embodiment, the technical feature "an index of a reference serving cell is used to determine a position of the target HARQ bit in the first HARQ bit block" includes the following meaning: the index of the reference serving cell is used to obtain the position of the target HARQ bit in the first HARQ bit block based on the process of determining a Type3 HARQ-ACK codebook.

In one embodiment, the technical feature "an index of a reference serving cell is used to determine a position of the target HARQ bit in the first HARQ bit block" includes the following meaning: the bits in the first HARQ bit block are indexed according to an index of a corresponding serving cell and a corresponding PDSCH candidate occasion, the target HARQ bit in the first HARQ bit block corresponding to the index of the reference serving cell and the PDSCH candidate occasion associated with the first signaling.

In one embodiment, the technical feature "an index of a reference serving cell is used to determine a position of the target HARQ bit in the first HARQ bit block" includes the following meaning: the bits in the first HARQ bit block are indexed according to an index of a corresponding serving cell and a corresponding PDCCH occasion, the target HARQ bit in the first HARQ bit block corresponding to the index of the reference serving cell and the PDCCH occasion to which the first signaling belongs.

In one embodiment, the first signaling is used for release of SPS PDSCHs on the multiple serving cells.

In one embodiment, the first signaling is used for simultaneously releasing SPS PDSCHs on the multiple serving cells.

In one embodiment, a serving cell to which the first signaling belongs is a serving cell that transmits the first signaling.

In one embodiment, a serving cell to which the first signaling belongs is a serving cell to which a BWP to which the first signaling belongs in the frequency domain belongs.

In one embodiment, a serving cell to which the first signaling belongs is a serving cell configured with the first signaling.

In one embodiment, a serving cell to which the first signaling belongs is a serving cell to which a configuration signaling of the first signaling belongs.

In one embodiment, a serving cell to which the first signaling belongs is a serving cell to which a control resource set to which the first signaling belongs belongs.

In one embodiment, a serving cell to which the first signaling belongs is a serving cell to which a search space set to which the first signaling belongs belongs.

In one embodiment, the technical feature "the reference serving cell being a pre-defined serving cell among the multiple serving cells" comprises the meaning that the reference serving cell is a serving cell with the largest serving cell index among the multiple serving cells.

In one embodiment, the technical feature "the reference serving cell being a pre-defined serving cell among the multiple serving cells" comprises the meaning that the reference serving cell is a serving cell with the smallest serving cell index among the multiple serving cells.

In one embodiment, the technical feature "the reference serving cell being a pre-defined serving cell among the multiple serving cells" comprises the meaning that the reference serving cell is a Special Cell among the multiple serving cells.

In one embodiment, the technical feature "the reference serving cell being a pre-defined serving cell among the multiple serving cells" comprises the meaning that the reference serving cell is a Primary Cell among the multiple serving cells.

In one embodiment, the technical feature "the reference serving cell being a pre-defined serving cell among the multiple serving cells" comprises the meaning that the reference serving cell is a Self-scheduling serving cell among the multiple serving cells.

In one embodiment, the technical feature "the reference serving cell being a pre-defined serving cell among the multiple serving cells" comprises the meaning that the reference serving cell is a serving cell with the largest associated CIF value among the multiple serving cells.

In one embodiment, the technical feature "the reference serving cell being a pre-defined serving cell among the multiple serving cells" comprises the meaning that the reference serving cell is a serving cell with the smallest associated CIF value among the multiple serving cells.

In one embodiment, the technical feature "the reference serving cell being a pre-defined serving cell among the multiple serving cells" comprises the meaning that the reference serving cell is a serving cell having the largest SPS configuration index among the multiple serving cells.

In one embodiment, the technical feature "the reference serving cell being a pre-defined serving cell among the multiple serving cells" comprises the meaning that the reference serving cell is a serving cell having the smallest SPS configuration index among the multiple serving cells.

## Embodiment 12

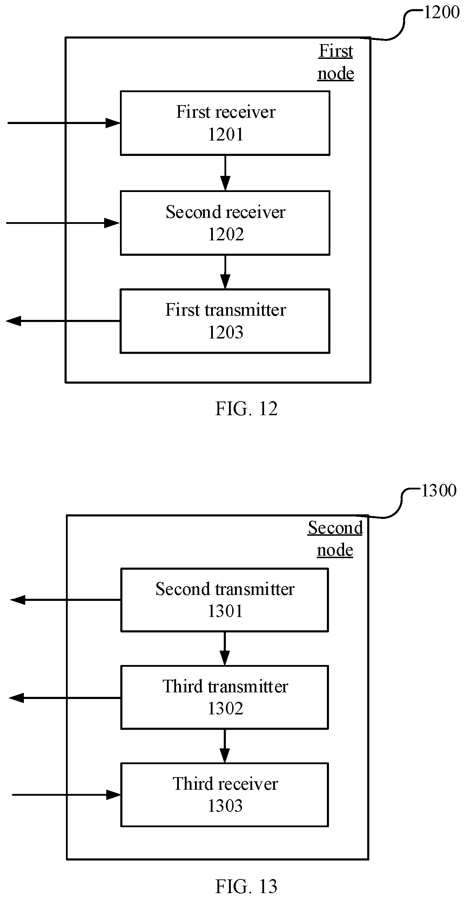

Embodiment 12 illustrates a structure block diagram of a processing device in a first node in an example, as shown in FIG. 12. In FIG. 12, a first node's processing device 1200 comprises a first receiver 1201, a second receiver 1202 and a first transmitter 1203. The first receiver 1201 comprises the transmitter/receiver 456 (comprising the antenna 460), the receiving processor 452 and the controller/processor 490 in FIG. 4 of the present application; the second receiver 1202 comprises the transmitter/receiver 456 (comprising the antenna 460), the receiving processor 452 and the controller/-processor 490 in FIG. 4 of the present application; the first transmitter 1203 comprises the transmitter/receiver 456 (comprising the antenna 460), the transmitting processor 455 and the controller/processor 490 in FIG. 4 of the present application.

In Embodiment 12, the first receiver 1201 receives a first information block and a second information block, the first information block being used to determine M1 delay sets, each one of the M1 delay sets including at least one delay value, M1 being a positive integer greater than 1; the second receiver 1202 receives a first signaling, the first signaling being used to determine a first slot, the first slot being used to determine a reference slot; and the first transmitter 1203 transmits a first signal in a target slot, the first signal carrying at least one HARQ-ACK bit associated to the first signaling; herein, each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE, and the second information block is used to determine a first indication value, the first indication value being associated to the at least one serving cell for which the first signaling is used for, the first indication value being used to determine CCE(s) occupied by the first signaling.

In one embodiment, a first information sub-block is an information sub-block included by the first information block, and the first information sub-block is used to determine a first delay set, the first delay set including at least one delay value; whether the first information block includes a second information sub-block is used to determine whether the M1 delay sets include the first delay set, the second information sub-block being an information sub-block other than the first information sub-block.

In one embodiment, a target information sub-block is used to determine a second delay set; when the first information block includes the target information sub-block, the M1 delay sets include the second delay set; otherwise, the M1 delay sets include a third delay set, the third delay set being pre-defined.

In one embodiment, when the target delay set includes multiple delay values, the first signaling is used to determine from the target delay set the number of slots between the reference slot and the target slot; when the target delay set includes only one delay value, the number of slots between the reference slot and the target slot is equal to the only one delay value included by the target delay set.

In one embodiment, the first signaling is used to determine multiple time-domain resource sets, each one of the multiple time-domain resource sets including at least one time-domain symbol; the first slot is a downlink slot that overlaps in time domain with a latest time-domain symbol included by the multiple time-domain resource sets.

In one embodiment, the first signaling is used to determine a number of serving cells for which the first signaling is used; when the number of serving cells for which the first signaling is used is greater than 1, the target delay set is one of the M1 delay sets; otherwise, the target delay set is another one of the M1 delay sets.

In one embodiment, the first signal carries a first HARQ bit block, the first HARQ bit block including multiple HARQ-ACK bits; a detection of the first signaling is used to determine a bit value of a target HARQ bit, the target HARQ bit belongs to the first HARQ bit block, and an index of a reference serving cell is used to determine a position of the target HARQ bit in the first HARQ bit block; the first signaling is used for multiple serving cells, the reference serving cell being a serving cell to which the first signaling belongs or the reference serving cell being a pre-defined serving cell among the multiple serving cells.

## Embodiment 13

Embodiment 13 illustrates a structure block diagram of a processing device in a second node in an example, as shown in FIG. 13. In FIG. 13, a second node's processing device 1300 comprises a second transmitter 1301, a third transmitter 1302 and a third receiver 1303. The second transmitter 1301 comprises the transmitter/receiver 416 (comprising the antenna 460), the transmitting processor 415 and the controller/processor 440 in FIG. 4 of the present application; the third transmitter 1302 comprises the transmitter/receiver 416 (comprising the antenna 460), the transmitting processor 415 and the controller/processor 440 in FIG. 4 of the present application; the third receiver 1303 comprises the transmitter/receiver 416 (comprising the antenna 460), the receiving processor 412 and the controller/processor 440 in FIG. 4 of the present application.

In Embodiment 13, the second transmitter 1301 transmits a first information block and a second information block, the first information block being used to determine M1 delay sets, each one of the M1 delay sets including at least one delay value, M1 being a positive integer greater than 1; the third transmitter 1302 transmits a first signaling, the first signaling being used to determine a first slot, the first slot being used to determine a reference slot; and the third receiver 1303 receives a first signal in a target slot, the first signal carrying at least one HARQ-ACK bit associated to the first signaling; herein, each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE, and the second information block is used to determine a first indication value, the first indication value being associated to the at least one serving cell for which the first signaling is used for, the first indication value being used to determine CCE(s) occupied by the first signaling.

In one embodiment, a first information sub-block is an information sub-block included by the first information block, and the first information sub-block is used to determine a first delay set, the first delay set including at least one delay value; whether the first information block includes a second information sub-block is used to determine whether the M1 delay sets include the first delay set, the second information sub-block being an information sub-block other than the first information sub-block.

In one embodiment, a target information sub-block is used to determine a second delay set; when the first information block includes the target information sub-block, the M1 delay sets include the second delay set; otherwise, the M1 delay sets include a third delay set, the third delay set being pre-defined.

In one embodiment, when the target delay set includes multiple delay values, the first signaling is used to determine from the target delay set the number of slots between the reference slot and the target slot; when the target delay set includes only one delay value, the number of slots between the reference slot and the target slot is equal to the only one delay value included by the target delay set.

In one embodiment, the first signaling is used to determine multiple time-domain resource sets, each one of the multiple time-domain resource sets including at least one time-domain symbol; the first slot is a downlink slot that overlaps in time domain with a latest time-domain symbol included by the multiple time-domain resource sets.

In one embodiment, the first signaling is used to determine a number of serving cells for which the first signaling is used; when the number of serving cells for which the first signaling is used is greater than 1, the target delay set is one of the M1 delay sets; otherwise, the target delay set is another one of the M1 delay sets.

In one embodiment, the first signal carries a first HARQ bit block, the first HARQ bit block including multiple HARQ-ACK bits; a detection of the first signaling is used to determine a bit value of a target HARQ bit, the target HARQ bit belongs to the first HARQ bit block, and an index of a reference serving cell is used to determine a position of the target HARQ bit in the first HARQ bit block; the first signaling is used for multiple serving cells, the reference serving cell being a serving cell to which the first signaling belongs or the reference serving cell being a pre-defined serving cell among the multiple serving cells.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The first node or the second node, or UE or terminal includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts, etc. The base station or network equipment in the present application includes but is not limited to macro-cellular base stations, micro-cellular base stations, home base stations, relay base station, eNB, gNB, Transmitter Receiver Point (TRP), relay satellite, satellite base station, airborne base station and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

**Claims**

1. A first node for wireless communications, comprising:

   a first receiver, receiving a first information block and a second information block, the first information block being used to determine M1 delay sets, each one of the M1 delay sets including at least one delay value, M1 being a positive integer greater than 1; and
   a second receiver, receiving a first signaling, the first signaling being used to determine a first slot, the first slot being used to determine a reference slot; and
   a first transmitter, transmitting a first signal in a target slot, the first signal carrying at least one HARQ-ACK (Hybrid Automatic Repeat Request Acknowledgement) bit associated to the first signaling;
   wherein each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE (Control Channel Element), and the second information block is used to determine a first indication value, the first indication value being associated to the at least one serving cell for which the first signaling is used for, the first indication value being used to determine CCE(s) occupied by the first signaling.

2. The first node according to claim 1, **characterized in that** a first information sub-block is an information sub-block included by the first information block, and the first information sub-block is used to determine a first delay set, the first delay set including at least one delay value; whether the first information block includes a second information sub-block is used to determine whether the M1 delay sets include the first delay set, the second information sub-block being an information sub-block other than the first information sub-block.

3. The first node according to claim 1 or 2, **characterized in that** a target information sub-block is used to determine a second delay set; when the first information block includes the target information sub-block, the M1 delay sets include the second delay set; otherwise, the M1 delay sets include a third delay set, the third delay set being pre-defined.

4. The first node according to any of claims 1-3, **characterized in that** when the target delay set includes multiple delay values, the first signaling is used to determine from the target delay set the number of slots between the reference slot and the target slot; when the target delay set includes only one delay value, the number of slots between the reference slot and the target slot is equal to the only one delay value included by the target delay set.

5. The first node according to any of claims 1-4, **characterized in that** the first signaling is used to determine multiple time-domain resource sets, each one of the multiple time-domain resource sets including at least one time-domain symbol; the first slot is a downlink slot that overlaps in time domain with a latest time-domain symbol included by the multiple time-domain resource sets.

6. The first node according to any of claims 1-5, **characterized in that** the first signaling is used to determine a number of serving cells for which the first signaling is used; when the number of serving cells for which the first signaling is used is greater than 1, the target delay set is one of the M1 delay sets; otherwise, the target delay set is another one of the M1 delay sets.

7. The first node according to any of claims 1-6, **characterized in that** the first signal carries a first HARQ bit block, the first HARQ bit block including multiple HARQ-ACK bits; a detection of the first signaling is used to determine a bit value of a target HARQ bit, the target HARQ bit belongs to the first HARQ bit block, and an index of a reference serving cell is used to determine a position of the target HARQ bit in the first HARQ bit block; the first signaling is used for multiple serving cells, the reference serving cell being a serving cell to which the first signaling belongs or the reference serving cell being a pre-defined serving cell among the multiple serving cells.

8. A second node for wireless communications, comprising:

a second transmitter, transmitting a first information block and a second information block, the first information block being used to determine M1 delay sets, each one of the M1 delay sets including at least one delay value, M1 being a positive integer greater than 1; and

a third transmitter, transmitting a first signaling, the first signaling being used to determine a first slot, the first slot being used to determine a reference slot; and

a third receiver, receiving a first signal in a target slot, the first signal carrying at least one HARQ-ACK (Hybrid Automatic Repeat Request Acknowledgement) bit associated to the first signaling;

wherein each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE (Control Channel Element), and the second information block is used to determine a first indication value, the first indication value being associated to the at least one serving cell for which the first signaling is used for, the first indication value being used to determine CCE(s) occupied by the first signaling.

9. A method in a first node for wireless communications, comprising:

receiving a first information block and a second information block, the first information block being used to determine M1 delay sets, each one of the M1 delay sets including at least one delay value, M1 being a positive integer greater than 1; and

receiving a first signaling, the first signaling being used to determine a first slot, the first slot being used to determine a reference slot; and

transmitting a first signal in a target slot, the first signal carrying at least one HARQ-ACK (Hybrid Automatic Repeat Request Acknowledgement) bit associated to the first signaling;

wherein each delay value included in each one of the M1 delay sets is an integer, a target delay set is one of the M1 delay sets, and a number of slots spaced between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE (Control Channel Element), and the second information block is used to determine a first indication value, the first indication value being associated to the at least one serving cell for which the first signaling is used for, the first indication value being used to determine CCE(s) occupied by the first signaling.

10. A method in a second node for wireless communications, comprising:

transmitting a first information block and a second information block, the first information block being used to determine M1 delay sets, each one of the M1 delay sets including at least one delay value, M1 being a positive integer greater than 1; and

transmitting a first signaling, the first signaling being used to determine a first slot, the first slot being used to determine a reference slot; and

receiving a first signal in a target slot, the first signal carrying at least one HARQ-ACK (Hybrid Automatic Repeat Request Acknowledgement) bit associated to the first signaling;

wherein each delay value included in each one of the M1 delay sets is an integer, a target delay set is one of the M1 delay sets, and a number of slots between the reference slot and the target slot is equal to a delay value included in the target delay set; the first slot is a downlink slot, and the reference slot is an uplink slot, a time length of the reference slot being related to a subcarrier spacing of a subcarrier occupied by the first signal; the first signaling is used for at least one serving cell, and a number of serving cell(s) for which the first signaling is used is used to determine the target delay set out of the M1 delay sets; the first signaling occupies at least one CCE (Control Channel Element), and the second information block is used to determine a first indication value, the first indication value being associated to the at least one serving cell for which the first signaling is used for, the first indication value being used to determine CCE(s) occupied by the first signaling.

100

receiving first information block and second information block — 101

receiving first signaling — 102

transmitting first signal in target slot — 103

FIG. 1

5GS/EPS 200

NR-RAN/EUTRAN **202**

HSS/UDM — 220

UE — 201

NR/evolved node B — 203

MME/AMF/SMF — 211

other MMEs/AMFs/SMFs — 214

UE — 241

other NR/evolved nodes B — 204

S-GW/UPF — 212

P-GW/UPF — 213

Internet service — 230

5GC/EPC **210**

FIG. 2

Control plane 300

L3 | RRC — 306

| PDCP — 304

L2 | RLC — 303

| MAC — 302

L1 | PHY — 301

305

User plane 350

L2 | SDAP — 356

| PDCP — 354

| RLC — 353

| MAC — 352

L1 | PHY — 351

355

FIG. 3

**410**

**450**

**420**

**460**

**416**

**456**

**415**

**455**

Transmitting processor

Transmi tter

Transmi tter

Transmitting processor

Receiver

Receiver

**440**

**420**

**460**

**490**

Controller /processor

Controller /processor

Memory

Receiving processor

Transmi tter

Transmi tter

Receiving processor

Memory

Receiver

Receiver

**430**

**412**

**416**

**456**

**452**

**480**

FIG. 4

| Second node N500 | | First node U550 |
|---|---|---|

S501. transmitting second information block

second information block

S551. receiving second information block

S502. transmitting first information block

first information block

S552. receiving first information block

S503. transmitting first signaling

first signaling

S553. receiving first signaling

S554. transmitting first signal in target slot

first signal

S504. receiving first signal in target slot

End

End

FIG. 5

being
ignored

| | First<br>information<br>sub-block | | Second<br>information<br>sub-block | ・・・ |
|---|---|---|---|---|

FIG. 6

**Second delay set**

| delay value#1 | delay value#2 | ・・・ |
|---|---|---|

target information sub-block is not provided

**Third delay set**

| delay value#1 | delay value#2 | ・・・ |
|---|---|---|

FIG. 7

First signaling

| delay value#1 | delay value#2 | ・・・ | | ・・・ |
|---|---|---|---|---|

**Case A**

**Case B**

FIG. 8

time-domain
resource set#1

time-domain
resource set#2

time-domain resource set#3

time-domain resource set#4

Time

FIG. 9

Case A

Case B

FIG. 10

index of reference
serving cell

· · ·    · · ·

FIG. 11

1200

First
node

First receiver
1201

Second receiver
1202

First transmitter
1203

FIG. 12

1300

Second
node

Second transmitter
1301

Third transmitter
1302

Third receiver
1303

FIG. 13

**EP 4 535 703 A1**

## INTERNATIONAL SEARCH REPORT

International application No.

**PCT/CN2023/102049**

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 参考时隙, 第二发射, 第二接收, 第三发射, 第三接收, 第一发射, 第一发送, 第一接收, 发射机, 集合, 接收机, 目标时隙, 上行时隙, 时隙, 小区, 信令, 信息块, 延迟, 延时, ACK, CCE, node, wireless communication, delay, receiver, transmitter, HARQ, time slot

### C. DOCUMENTS CONSIDERED TO BE RELEVANT

| Category* | Citation of document, with indication, where appropriate, of the relevant passages | Relevant to claim No. |
|---|---|---|
| A | CN 112839384 A (SHANGHAI LANGBO COMMUNICATION TECHNOLOGY CO., LTD.) 25 May 2021 (2021-05-25) claims 1-10, and description, paragraphs [0122]-[0163] and [0618]-[0622] | 1-10 |
| A | CN 111918379 A (SHANGHAI LANGBO COMMUNICATION TECHNOLOGY CO., LTD.) 10 November 2020 (2020-11-10) entire document | 1-10 |
| A | CN 114666021 A (SHANGHAI LANGBO COMMUNICATION TECHNOLOGY CO., LTD.) 24 June 2022 (2022-06-24) entire document | 1-10 |
| A | US 2018227912 A1 (QUALCOMM INC.) 09 August 2018 (2018-08-09) entire document | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 August 2023** | **14 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/102049**

| Patent document cited in search report | | | Publication date (day/month/year) | Patent family member(s) | | | Publication date (day/month/year) |
|---|---|---|---|---|---|---|---|
| CN | 112839384 | A | 25 May 2021 | WO | 2021103925 | A1 | 03 June 2021 |
| CN | 111918379 | A | 10 November 2020 | CN | 111918379 | B | 08 July 2022 |
| CN | 114666021 | A | 24 June 2022 | US | 2022201562 | A1 | 23 June 2022 |
| US | 2018227912 | A1 | 09 August 2018 | WO | 2018145007 | A1 | 09 August 2018 |

Form PCT/ISA/210 (patent family annex) (July 2022)